# NEUE EUROPÄISCHE PATENTSCHRIFT

(11) **EP 1 519 988 B2**
(45) Veröffentlichungstag und Bekanntmachung des Hinweises auf die Entscheidung über den Einspruch: **17.08.2011**
(45) Hinweis auf die Patenterteilung: 02.01.2008
(21) Anmeldenummer: 03740243.5
(22) Anmeldetag: 13.06.2003
(51) Int. Cl.: C08K 5/19

(54) **POLYMERZUSAMMENSETZUNGEN AUS POLYMEREN UND IONISCHEN FLÜSSIGKEITEN**
POLYMERIC COMPOSITIONS CONTAINING POLYMERS AND IONIC LIQUIDS
COMPOSITIONS POLYMERIQUES CONTENANT DES POLYMERES ET DES LIQUIDES IONIQUES

(30) Priorität: 05.07.2002 DE 10230572; 18.09.2002 DE 10243181
(43) Veröffentlichungstag der Anmeldung: 06.04.2005
(73) Patentinhaber: Evonik Goldschmidt GmbH, 45127 Essen (DE)
(72) Erfinder: SCHMIDT, Friedrich, Georg, 45721 Haltern am See (DE); PETRAT, Frank-Martin, 48151 Münster (DE); PAWLIK, Andreas, 45657 Recklinghausen (DE); HÄGER, Harald, 63579 Freigericht (DE); WEYERSHAUSEN, Bernd, 45127 Essen (DE)
(74) Vertreter: Rotenberg, Klaus
(86) Internationale Anmeldenummer: PCT/EP2003/006245
(87) Internationale Veröffentlichungsnummer: WO 2004/005391

(56) Entgegenhaltungen:
- EP-A- 0 905 183
- WO-A-01/44363
- WO-A1-2001/049925
- GB-A- 1 104 662
- JP-A- 4 099 343
- US-A- 4 006 115
- US-A- 4 943 380
- US-A1- 2002 132 889
- SCOTT, MARK P. ET AL: "Application of ionic liquids as plasticizers for poly(methyl methacrylate)" , CHEMICAL COMMUNICATIONS (CAMBRIDGE, UNITED KINGDOM) (2002), (13), 1370-1371 XP002257947 Whole document Abbildung 1
- M.P. SCOTT ET AL. CHEM. COMMUN. 2002, Seiten 1370 - 1371
- SAECHTLING: 'Kunststoff-Taschenbuch', Bd. 26, 1995, CARL HANSER VERLAG, MÜNCHEN WIEN Seiten 366 - 368
- DR.OTTO-ALBRECHT NEUMUELLER: 'Roempps Chemie-Lexikon 8 Auflage', Bd. BAND 5, 1987, FRANCKH'SCHE VERLAGSHANDLUNG, STUTTGART Seite 3277
- P. WASSERSCHEID ET AL.: 'Ionische Fluessigkeiten - neue Loesungen fuer die Uebergangsmetallkatalyse' ANGEW. CHEM. Bd. 112, 2000, Seiten 3926 - 3927

## Beschreibung

Die vorliegende Erfindung betrifft eine Polymerzusammensetzung, die zumindest ein zumindest teilkristallines Polymer ohne ionische Gruppen und zumindest eine Verbindung mit weichmachenden Eigenschaften aufweist, wobei die Polymerzusammensetzung als Weichmacher 0,1 Gew.-% bis 30 Gew.-% ionische Flüssigkeit aufweist, sowie ein Verfahren zu deren Herstellung als auch deren Verwendung.

Bereits seit mehreren Jahren sind ionische Flüssigkeiten Gegenstand verschiedener Forschungsarbeiten. Unter einer ionischen Flüssigkeit versteht man allgemein eine Flüssigkeit, die ausschließlich aus Ionen besteht. In Abgrenzung zum klassischen Begriff der Salzschmelze, bei der es sich gewöhnlich um ein hochschmelzendes, hochviskoses und meist sehr korrosives Medium handelt, sind ionische Flüssigkeiten bereits bei niedrigen Temperaturen (< 100 °C) flüssig und relativ niedrigviskos. Auch wenn es einige Beispiele gibt, in denen Hochtemperatursalzschmelzen erfolgreich als Reaktionsmedien in präparativen Anwendungen eingesetzt wurden, erlaubt doch erst die Tatsache, dass ionische Flüssigkeiten bereits unter 100°C im flüssigen Zustand vorliegen, deren Einsatz als Ersatz für konventionelle organische Lösungsmittel in chemischen Prozessen. Obwohl ionische Flüssigkeiten bereits seit 1914 bekannt sind, wurden diese doch erst in den letzten 10 Jahren intensiv als Lösungsmittel und/oder Katalysator in organischen Synthesen untersucht (Übersichtsartikel von K. R. Seddon in J. Chem. Technol. Biotechnol. 68 (1997), 351-356; T. Welton, in Chem. Rev. 99 (1999), 2071-2083; J. D. Holbrey, K. R. Seddon in Clean Products and Processes 1 (1999) 223-236; P. Wasserscheid, W. Keim in Angew. Chem. 112 (2000), 3926-3945 und R. Sheldon in Chem. Comm. (2001), 2399-2407).

S. Fischer et al. berichten in ACS Symp. Ser. 737 (1999), 143-150 über Schmelzen von Hydraten anorganischer Salze und zwar LiJ·2H₂O, LiClO₄·3H₂O, NaSCN/KSCN/LiSCN·2H₂O und LiClO₄·3H₂O/Mg(ClO₄)₂, als Lösungsmittel für Cellulose.

Polymerextraktionen mit bei Raumtemperatur geschmolzenen Chloroaluminat-Salzen sind Gegenstand der Arbeiten von J. S. Wilkes et al. (Electrochem. Soc. Proceed. (2000) Volume 99-41 (Molten Salts XII), 65). Es wurden 1-Ethyl-2-methylimidazolium-chlorid/Aluminiumchlorid-Mischungen als ionische Flüssigkeiten verwendet und diverse Polymere, u.a. Nylon, Polyethylen, PVC und Butylkautschuk, untersucht.

WO 00/16902 und auch WO 00/20115 beschäftigen sich mit speziellen ionischen Flüssigkeiten, die als Katalysator oder als Lösungsmittel für Katalysatoren bei verschiedenen organischen Synthesen eingesetzt werden.

Sowohl für die Anwendung als Solvens für katalytische Reaktionen als auch für andere Einsatzbereiche kann es vorteilhaft sein, die ionische Flüssigkeit zu immobilisieren. Die Vorteile der Immobilisierung bei katalytischen Synthesen liegen in der vereinfachten Trennung, Gewinnung und Regenerierung des Katalysators und der geringeren Produktverschmutzung.

Immobilisierte ionische Flüssigkeiten sind beispielsweise aus EP-A-0 553 009 und US-A-5,693,585 bekannt. Beide Referenzen beschreiben einen calcinierten Träger, der mit einer ionischen Flüssigkeit, die aus Aluminiumchlorid und einem alkylierten Ammoniumchlorid oder Imidazoliniumchlorid besteht. Die immobilisierten ionischen Flüssigkeiten werden als Katalysatoren in Alkylierungsreaktionen verwendet.

WO-A-01/32308 beschreibt ionische Flüssigkeiten, die auf einem funktionalisierten Träger immobilisiert sind, der eine Komponente der ionischen Flüssigkeit oder einen Vorläufer einer solchen Komponente trägt oder enthält. Die ionische Flüssigkeit kann über das Anion durch Behandlung eines Trägers mit einer Anionenquelle, bevor die ionische Flüssigkeit aufgetragen oder gebildet wird, immobilisiert werden. Alternativ kann die ionische Flüssigkeit immobilisiert werden, indem das Kation kovalent an den Träger gebunden oder in den Träger eingelagert ist. Die immobilisierten ionischen Flüssigkeiten werden als Katalysatoren, z.B. für die Friedel-Crafts-Reaktion verwendet.

Auch die Arbeiten von N. Ogata, K. Sanui, M. Rikukawa, S. Yamada und M. Watanabe (Synthetic Metals 69 (1995), 521-524 und Mat. Res. Soc. Symp. Proc. 293, 135 ff.) beschäftigen sich mit "immobilisierten" ionischen Flüssigkeiten und zwar mit neuen Polymerelektrolyten, die ionenleitfähige Polymerkomplexe darstellen und durch Auflösen von verschiedenen polykationischen Salzen in ionischen Flüssigkeiten (hierin auch als "Salzschmelzen" bezeichnet), die Aluminiumchlorid enthalten, gebildet werden. Bei den polykationischen Salzen kann es sich um Polyammonium-, Polypyridinium-, Polysulfonium- und/oder Polyphosphoniumsalze handeln. Genauer untersucht wurde ein Polymerkomplex, der aus einem Polypyridiniumsalz und als ionische Flüssigkeit aus einem Pyridiniumsalz und Aluminiumchlorid besteht. Das Polypyridiniumsalz stellt in diesem Falle die ionische Flüssigkeit anstelle des Pyridiniumsalzes dar und ermöglicht, dass die Polymerkomplexe dünne Schichten ausbilden können, was aus dem enormen Anstieg der Viskosität gegenüber der reinen ionischen Flüssigkeit resultiert. Die neuen Polymerkomplexe weisen eine hohe Ionenleitfähigkeit auf und sind wie andere Polymerelektrolyte für die Anwendung in Batterien und Anzeigevorrichtungen von Interesse.

In US-A-6,025,457 sind Polyelektrolyte des "Salzschmelzen-Typs" offenbart, die ein Polymer des Salzschmelzen-Typs enthalten, das durch Reaktion eines Imidazoliumderivats, das einen Substituenten an der 1- und 3-Position trägt, mit mindestens einer organischen Säure oder einer organischen Säureverbindung, die eine Säureamid- oder Säureimidbindung aufweist, erhalten wird, wobei mindestens eine Komponente, d.h. besagtes Imidazoliumderivat oder besagte organische Säureverbindung ein polymerisierbares Monomer oder ein Polymer ist. Auch diese Polyelektrolyte zeigen eine hohe Ionenleitfähigkeit bei Raumtemperatur und haben gute mechanische Eigenschaften.

Weiterhin sind im Stand der Technik viele Polymerelektrolyte mit hoher Leitfähigkeit beschrieben, die aus einem nichtionischen Polymer in Kombination mit einer ionischen Flüssigkeit bestehen.

So beschreiben J. Fuller et al. in J. Electrochem. Soc. 144(4) (1997), L67-L70 kautschukartige Gelelektrolyte aus Poly(vinylidenfluorid-hexafluorpropyl)copolymeren und ionischen Flüssigkeiten auf Basis von 1-Ethyl-3-methylimidazolium-triflat bzw. -tetrafluoroborat.

In JP-A-10265673 wird die Herstellung von festen Polymerelektrolyten in Form von ionenleitender Folien durch Polymerisation von Hydroxyethylmethacrylat und Ethylenglykoldimethacrylat in Gegenwart einer ionischen Flüssigkeiten auf Basis von 1-Butylpyridinium-tetrafluoroborat offenbart.

GegenstanJ von JP-A-10265674 sind Zusammensetzungen aus Polymeren, z.B. Polyacrylnitril und Polyethylenoxid, und ionischen Flüssigkeiten. Die ionischen Flüssigkeiten enthalten beispielsweise LiBF₄ und 1-Ethyl-3-methylimidazolium-tetrafluoroborat. Als Verwendungen werden feste Elektrolyte, antistatische Agenzien und Abschirmungen angegeben.

Noda et al. berichten in Electrochim. Acta 45 (2000), 1265-1270, dass bestimmte Vinylmonomere in bei Raumtemperatur flüssigen Salzschmelzen aus 1-Ethyl-3-methylimidazolium-tetrafluoroborat bzw. 1-Butylpyridinium-tetrafluoroborat in-situ polymerisiert werden können und transparente, hochleitfähige und mechanisch stabile Polymerelektrolyt-Folien ergeben.

Fuller et al. (Molten Salt Forum 5-6 (1998), 605-608) untersuchten Mischungen aus ionischen Flüssigkeiten oder anderen Imidazoliumsalzen und Poly(vinylidenfluorid-hexafluorpropyl)-copolymeren. Diese Mischungen zeigen hohe Leitfähigkeit, thermische Stabilität und Dimensionsstabilität für Anwendungen in Batterien, Brennstoffzellen oder kapazitiven Einheiten als hochleitfähige Polymerelektrolyte.

Watanabe et al. offenbaren in Solid State Ionics 86-88 (1996), 353-356, dass bei Temperaturen unter 100°C flüssige Salzmischungen aus Trimethylammoniumbenzoat, Lithiumacetat und Lithium-bis(trifluormethylsulfonyl)imid mit Polyacrylnitril und Polyvinylbutyral kompatibel sind und Systeme ergeben, aus denen filmbildende Polymerelektrolyte hergestellt werden können.

Humphrey et al. (Book of Abstracts, 215th ACS National Meeting, Dallas. March 29-April 2 (1998), CHED-332, ACS, Washington D.C.) beschreiben die Lösung und Extraktion von Polymeren mit bei Raumtemperatur flüssigen Salzschmelzen aus Aluminiumchlorid und einem organischen Chlorid-Salz. Die ionischen Flüssigkeiten sind bzgl. ihrer Lewis-Acidität einstellbar und werden durch Zugabe von Chlorwasserstoff zu Supersäuren.
In Chem. Commun. (2002), 1370-1371 wird PMMA durch radikalische Polymerisation in einer ionischen Flüssigkeit hergestellt. Die Herstellung von weichgemachten Polymeren durch Polymerisation in ionischen Flüssigkeiten ist allerdings nicht für alle Polymerarten geeignet.

Viele Polymere, wie z.B. Polyaramide, Polyester, Polyamide, Polyether(ether)ketone, können nur mit Hilfe von bestimmten Verfahren bzw. nur mit Schwierigkeiten verarbeitet werden.

Zum Teil ist die thermoplastische Verarbeitung dieser Polymermaterialien als solche nicht möglich, ohne dass eine Zersetzung der Polymerkette auftritt. Eine Verarbeitung von Polymeren wird vielfach nur durch Einmischen von Weichmachern ermöglicht. Für den Hochtemperaturbereich sind viele der bekannten Weichmacher nicht geeignet. Dies kann zum einen an der zu hohen Flüchtigkeit der Weichmacher oder zum anderen an einer Inkompatibilität mit dem Polymer liegen. Insbesondere für Polymere, die polare Gruppen, wie z.B. bei den Polyamiden oder Polyestern, aufweisen, können häufig keine geeigneten, nicht korrosiven Weichmacher, die bei der Verarbeitung nicht ausgasen, gefunden werden.

Es war daher die Aufgabe der vorliegenden Erfindung eine Polymerzusammensetzung, die einen Weichmacher aufweist, bereitzustellen, der die Eigenschaften von zumindest teilkristallinen Polymeren, die keine ionischen Gruppen aufweisen, insbesondere bezüglich ihrer thermoplastischen Verarbeitbarkeit, verbessert und nicht bzw. nur in geringem Maße insbesondere bei den gemäß dem Stand der Technik gängigen Verarbeitungstemperaturen von

Thermoplasten flüchtig ist.
Überraschenderweise wurde gefunden, dass Polymere, die keine ionischen Gruppen enthalten, durch den Zusatz von ionischen Flüssigkeiten gemäß Ansprüche 1-12 in ihrer Verarbeitbarkeit, vorzugsweise in ihrer thermoplastischen Verarbeitbarkeit, in ihren elektrischen Eigenschaften und in ihrer Verträglichkeit mit anderen Systemen verbessert werden können. Obwohl die Verwendung von ionischen Flüssigkeiten als Katalysator oder zur Herstellung von Polymerelektrolyten seit längerem aus der Literatur bekannt sind, wurde bislang nicht erkannt, dass die Anwesenheit von ionischen Flüssigkeiten in Polymeren, die keine ionischen Gruppen aufweisen, die thermoplastische Verarbeitbarkeit verbessern und ionische Flüssigkeiten deshalb als Weichmacher verwendet werden können. Die Lösung war umso überraschender zumal sich zeigte, dass die ionischen Flüssigkeiten auch als Lösungsmittel für diese Polymere, die in organischen oder wässrigen Lösungsmittel nicht oder nur ungenügend löslich sind, eingesetzt und somit weichgemachte Polymerzusammensetzungen erhalten werden können.

Gegenstand der vorliegenden Erfindung ist daher eine Polymerzusammensetzung gemäß Anspruch 1 bestehend aus zumindest einem zumindest teilkristallinem Polymer ohne ionische Gruppen und zumindest einer Verbindung mit weichmachenden Eigenschaften, wobei die Polymerzusammensetzung als Weichmacher 0,1 Gew.-% bis 30 Gew.-% ionische Flüssigkeit aufweist.

Außerdem ist Gegenstand der Erfindung ein Verfahren gemäß Anspruch 13 zur Herstellung einer Polymerzusammensetzung, die zumindest ein Polymer ohne ionische Gruppen und zumindest eine Verbindung mit weichmachenden Eigenschaften aufweist, wobei die Polymerzusammensetzung als Weichmacher 0,1 Gew.-% bis 30 Gew.-% ionische Flüssigkeit aufweist.

Des weiteren ist Gegenstand der Erfindung die Verwendung einer Polymerzusammensetzung gemäß Anspruch 1, sowie die Verwendung einer Polymerzusammensetzung, die gemäß dem erfindungsgemäßen Verfahren hergestellt wurde.

Die erfindungsgemäße Polymerzusammensetzung hat den Vorteil, dass durch den lösemittelartigen Charakter der ionischen Flüssigkeit eine Erhöhung der Fließfähigkeit der Schmelzen dieser Polymerzusammensetzung gegeben ist, wobei der besondere Vorteil in der Nichtflüchtigkeit der ionischen Flüssigkeit auch bei den Verarbeitungstemperaturen der Polymerblends besteht. Damit können entweder Verarbeitungstemperaturen verwendet werden, bei denen die bisher verwendeten Weichmacher bzw. Verarbeitungshilfsmittel bereits einen zu hohen Dampfdruck aufweisen und zu Ausgasungen und/oder Form- bzw. Werkzeugbelagsbildungen führen, oder die Polymere können durch die weichmachende Wirkung bei niedrigeren Temperaturen verarbeitet werden. Dies ist insbesondere bei teilkristallinen oder kristallinen Polymeren von Vorteil, da diese auf Grund ihrer Morphologie überlicherweise höhere Schmelztemperaturen und damit verbunden höhere Verarbeitungstemperaturen (im Vergleich zu einem amorphen Polymer, wie z.B. PMMA) aufweisen. Durch den Einsatz von nicht-flüchtigen Weichmachern bei teilkristallinen oder kristallinen Polymeren wird es ermöglicht, diese Polymere bei höheren Temperaturen zu verarbeiten bzw. einzusetzen. Durch den Einsatz der ionischen Flüssigkeiten als Weichmacher wird die Fließfähigkeit der Polymermaterialien im geschmolzenen Zustand erhöht. Aufgrund ihres nicht-flüchtigen und ionischen Charakters und ihren besonderen Löseeigenschaften lassen sich ionische Flüssigkeiten als Weichmacher bzw. Lösemittel, insbesondere für Polymere oder Substanzen verwenden, die in organischen oder wässrigen Lösemitteln nicht oder nur ungenügend löslich sind. Beim Einsatz von vernetzten oder vernetzenden Polymeren in einem Stoffgemisch kann die ionische Flüssigkeit ebenfalls als Weichmacher, der die Glastemperatur herabsenkt, eingesetzt werden.

Die erfindungsgemäße Polymerzusammensetzung, die zumindest ein zumindest teilkristallines Polymer ohne ionische Gruppen und zumindest eine Verbindung mit weichmachenden Eigenschaften aufweist, zeichnet sich dadurch aus, dass die Polymerzusammensetzung als Weichmacher 0,1 Gew.-% bis 30 Gew.-%, bevorzugt von 0,5 Gew.-% bis 25 Gew.-% und besonders bevorzugt von 1 Gew.-% bis 16 Gew.-% an ionische Flüssigkeit aufweist. Die Konzentration der ionischen Flüssigkeit beträgt im Falle des Polyamids als thermoplastisch verarbeitbares Polymer, bei dem die ionische Flüssigkeit als Weichmacher eingesetzt wird, vorzugsweise von 1 Gew.-% bis 25 Gew.-%, bevorzugt von 3 Gew.-% bis 16 Gew.-%.

Die erfindungsgemäße ionische Flüssigkeit weist ein Salz mit einem Kation, gemäß den nachfolgenden Strukturen **2** bis **9** und **12** auf, 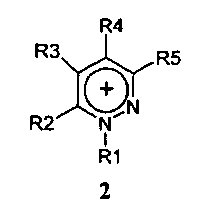 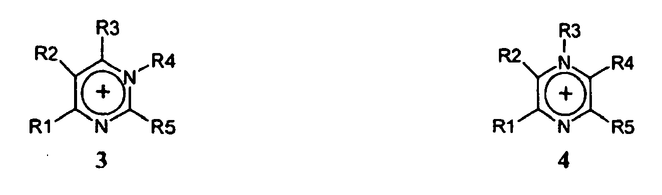 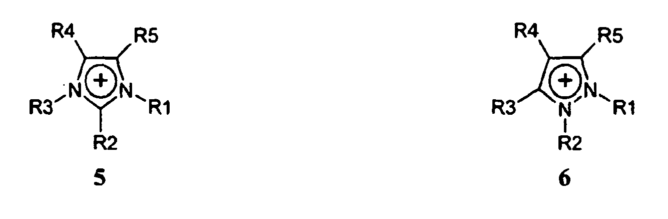 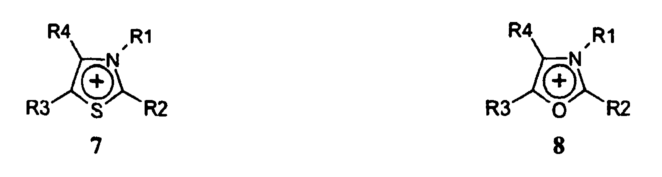 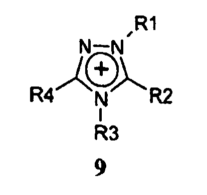 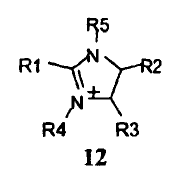 wobei R1, R2, R3, R4, R5 und, gleich oder unterschiedlich und Wasserstoff, einen linearen oder verzweigten aliphatischen Kohlenwasserstoffrest mit 1 bis 20 Kohlenstoffatomen, einen cycloaliphatischen Kohlenwasserstoffrest mit 5 bis 30 Kohlenstoffatomen, einen aromatischen Kohlenwasserstoffrest mit 6 bis 30 Kohlenstoffatomen, einen Alkylarylrest mit 7 bis 40 Kohlenstoffatomen, einen durch ein oder mehrere Heteroatome (Sauerstoff, NH, NCH₃) unterbrochenen linearen oder verzweigten aliphatischen Kohlenwasserstoffrest mit 2 bis 20 Kohlenstoffatomen, einen durch ein oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O)₂-O-, -O-S(O)₂-, -S(O)₂-NH-, -NH-S(O)₂-, -S(O)₂-N(CH₃)-, -N(CH₃)-S(O)₂-, unterbrochenen linearen oder verzweigten aliphatischen Kohlenwasserstoffrest mit 2 bis 20 Kohlenstoffatomen, einen endständig -OH, -NH₂, -N(H)CH₃ funktionalisierten linearen oder verzweigten aliphatischen Kohlenwasserstoffrest mit 1 bis 20 Kohlenstoffatomen oder einen blockweise oder statistisch aufgebauten Polyether gemäß -(R⁷-O)ₙ-R⁸ bedeuten, wobei R⁷ ein 2 bis 4 Kohlenstoffatome enthaltender linearer oder verzweigter Kohlenwasserstoffrest ist, n = 1 bis 30 ist und R⁸ Wasserstoff, einen linearen oder verzweigten aliphatischen Kohlenwasserstoffrest mit 1 bis 20 Kohlenstoffatomen, einen cycloaliphatischen Kohlenwasserstoffrest mit 5 bis 30 Kohlenstoffatomen, einen aromatischen Kohlenwasserstoffrest mit 6 bis 30 Kohlenstoffatomen, einen Alkylarylrest mit 7 bis 40 Kohlenstoffatomen bedeutet oder ein Rest -C(O)-R⁹ mit R⁹ gleich einem linearen oder verzweigten aliphatischen Kohlenwasserstoffrest mit 1 bis 20 Kohlenstoffatomen, einem cycloaliphatischen Kohlenwasserstoffrest mit 5 bis 30 Kohlenstoffatomen, einem aromatischen Kohlenwasserstoffrest mit 6 bis 30 Kohlenstoffatomen, einem Alkylarylrest mit 7 bis 40 Kohlenstoffatomen sind; und einem Anion, ausgewählt aus der Gruppe bestehend aus Halogeniden, d.h. Chlorid, Bromid und Iodid, vorzugsweise Iodid; Phosphat; Alkylphosphaten; Nitrat; Sulfat; Hydrogensulfat; Alkylsulfaten, vorzugsweise Octylsulfat; Arylsulfaten; perfluorierten Aryl- und Alkylsulfaten; Sulfonat, Alkylsulfonaten; Arylsulfonate; perfluorierten Arylsulfonaten, Perchlorat; Tetrachloroaluminat; Alkylboraten, vorzugsweise B(C₂H₅)₃C₆H₁₃ ; Tosylat; Saccharinat; Alkylcarboxylaten und, oder eine Mischung mehrerer solcher Salze.

In einer bevorzugten Ausführungsform der erfindungsgemäßen Polymerzusammensetzung weist die ionische Flüssigkeit halogenfreie Anionen auf, ausgewählt aus der Gruppe bestehend aus Phosphat, Alkylphosphaten, Nitrat, Sulfat, Alkylsulfaten, Arylsulfaten, Sulfonat, Alkylsulfonaten, Arylsulfonaten, Alkylboraten, Tosylat, Saccharinat und Alkylcarboxylaten, besonders bevorzugt sind Alkylsulfate, insbesondere Octylsulfat, und Tosylat.

In einer weiteren bevorzugten Ausführungsform der erfindungsgemäßen Polymerzusammensetzung weist die ionische Flüssigkeit unterschiedliche Anionen und/oder Kationen auf. Die z.B. als Weichmacher eingesetzten, ionischen Flüssigkeiten können somit einzeln oder im Gemisch in der erfindungsgemäßen Polymerzusammensetzung eingesetzt werden.

Die Herstellung der ionischen Flüssigkeit erfolgt wie sie in der Literatur, u.a. in S. Saba, A. Brescia, M. Kaloustian, Tetrahedron Letters 32(38) (1991), 5031-5034, EP 1 072 654 und EP 1 178 106, beschrieben ist.

Vorzugsweise weist die erfindungsgemäße Polymerzusammensetzung zumindest ein thermoplastisch verarbeitbares Polymer, ausgewählt aus der Gruppe der (Co)polyamide, (Co)polyester, Polyurethane, Polyphenylenether, Polyolefine, (Co)polyetheramide, Polyaramide, Polyether(ether)ketone, Polyetheresteramide, auf.

In einer besonderen Ausführungsform der erfindungsgemäßen Polymerzusammensetzung weist sie zumindest ein thermoplastisch verarbeitbares Polymer aus der Gruppe der Homopolyamide auf. Bevorzugt sind hierbei Homopolyamide gemäß der Struktur **13** oder Struktur **14**, wobei sowohl n ≥ 2 als auch k ≥ 2 (unabhängig voneinander) und m > 3 ist.

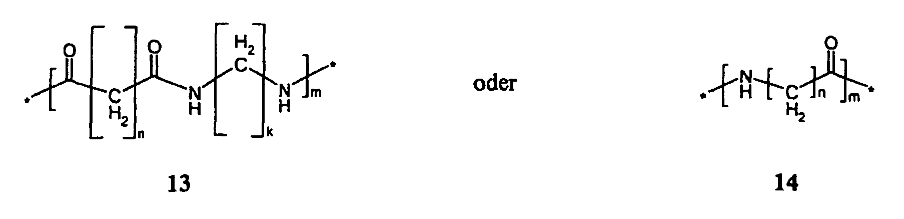

Beispiele für Polymere gemäß den Strukturen **13** und **14** sind Polyamid 46, Polyamid 66, Polyamid 69, Polyamid 612, Polyamid 1012, Polyamid 1212, Polyamid 6, Polyamid 11 und Polyamid 12.

In einer weiteren Ausführungsform der erfindungsgemäßen Polymerzusammensetzung weist diese aromatische Polyamide auf der Basis von aromatischen Dicarbonsäuren und/oder aromatischen Diaminen, bevorzugt sind aromatische Polyamide auf der Basis von Terephthalsäure, z.B. Polyamid PA-6,3T, Isophthalsäure und Naphthalindicarbonsäuren, auf. Bevorzugt weist hierbei die erfindungsgemäße Polymerzusammensetzung ein thermoplastisch verarbeitbares Polymer gemäß den nachfolgenden Strukturen **15**, **16** und **17** auf, wobei x = 2 bis 22 und y = 2 bis 22 ist: 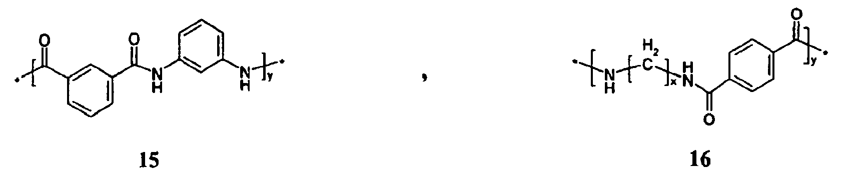 oder

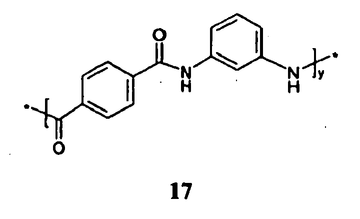

In einer besonders bevorzugten Ausführungsform der erfindungsgemäßen Polymerzusammensetzung weist diese aliphatische Polyamide und/oder Copolyamide auf. Die Polyamide der erfindungsgemäßen Polymerzusammensetzung weisen als polyamidbildendes Monomer vorzugsweise Lactame bzw. ω-Aminocarbonsäuren auf, die 4 bis 19 und insbesondere 6 bis 12 Kohlenstoffatome enthalten. Besonders bevorzugt werden ε-Caprolactam, ε-Aminocapronsäure, Capryllactam, ω-Aminocaprylsäure, Laurinlactam, ω-Aminododecansäure und/oder ω-Aminoundecansäure eingesetzt.

Kombinationen von Diamin und Dicarbonsäure sind beispielsweise Hexamethylendiamin /Adipinsäure, Hexamethylendiamin / Dodecandisäure, Octamethylendiamin / Sebacinsäure, Decamethylendiamin / Sebacinsäure, Decamethylendiamin / Dodecandisäure, Dodecamethylendiamin / Dodecandisäure und Dodecamethylendiamin / 2,6-Naphthalindicarbonsäure. Daneben können aber auch alle anderen Kombinationen eingesetzt werden wie Decamethylendiamin / Dodecandisäure / Terephthalsäure, Hexamethylendiamin /Adipinsäure / Terephthalsäure, Hexamethylendiamin / Adipinsäure / Caprolactam, Decamethylendiamin / Dodecandisäure / ω-Aminoundecansäure, Decamethylendiamin /Dodecandisäure / Laurinlactam, Decamethylendiamin / Terephthalsäure / Laurinlactam oder Dodecamethylendiamin / 2,6-Naphthalindicarbonsäure / Laurinlactam.

Die erfindungsgemäße Polymerzusammensetzung kann als thermoplastisch verarbeitbares Polymer Copolyamide enthalten. Hierfür eignen sich bevorzugt solche, die Grundmonomere enthalten, welche zu den obengenannten Homopolyamiden führen. Als Cokomponente können Laurinlactam, 11-Aminoundecansäure, Caprolactam, Adipinsäure/Hexamethylendiamin, Dodecandisäure/Hexamethylendiamin, Dodecandisäure/Methylpentandiamin, Dodecandisäure/Decamethylendiamin und Dodecandisäure/Isophorondiamin eingesetzt werden. Derartige Copolyamide werden z.B. in DE 39 21 164, DE 23 24 160, DE 19 39 758 und DE 32 48 776 beschrieben. Die aufgeführten Copolyamide können einzeln oder im Gemisch für die erfindungsgemäße Polymerzusammensetzung eingesetzt werden. Sowohl die Homopolyamide als auch die Copolyamide können linear oder verzweigt sein.

Die erfindungsgemäße Polymerzusammensetzung kann als thermoplastisch verarbeitbares Polymer Homo- und/oder Copolyester, wie z.B. Polyalkylenterphthalate; insbesondere Polyethylenterephthalat und Polybutylenterephthalat, Polybutylennaphthalat, Polyethylennaphthalat, 1,4-Cyclohexandimethanol(co)polyester, Polycaprolacton, Polyoxytetramethylen-b-polybutylenterephthalat, Polylactide, aufweisen. Vorzugsweise sind dies Copolyester gemäß der Struktur **18**: 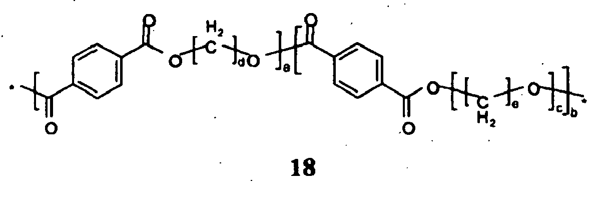 wobei d = 2 bis 6, e = 2 bis 4, a > 20, b = 0 bis 40, c = 1 bis 40 sind und die Struktureinheiten, die auf Monomere mit jeweils zwei Hydroxylgruppen basieren, können linear oder verzweigt sein. Bevorzugt sind Copolyester gemäß der Struktur **19**: 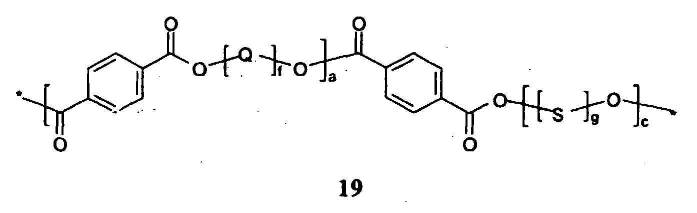 wobei g = 1 bis 5, f = 1 bis 5 und Q und S unabhängig voneinander bivalente Reste, z.B. gemäß den Strukturen **20**, **21**, **22** und **23**, sein können:

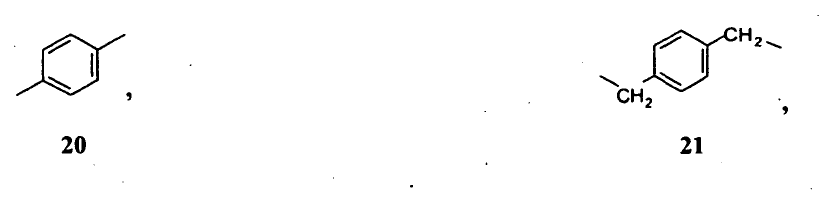

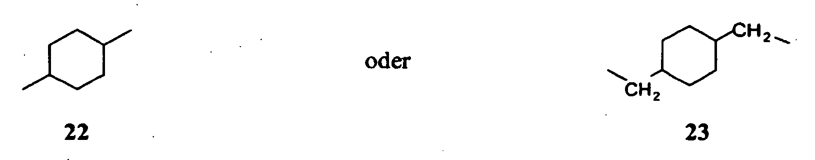

Besonders bevorzugt sind Copolyester, die aus verschiedenen Hydroxycarbonsäuren und/oder Lactonen entstehen, gemäß der Struktur **24**: 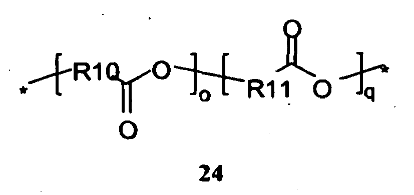 wobei sowohl R10 als auch R11 lineare oder verzweigte Alkylreste, vorzugsweise o >1 und q < 200 und bevorzugt jedoch o > 10 und q < 70 sein können.

Ganz besonders bevorzugt sind Copolyester gemäß der Struktur **25**: 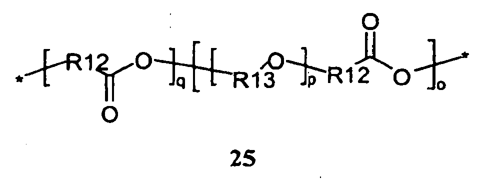 wobei R12 lineare oder verzweigte Alkylreste, die entweder gleich oder verschieden sein können, R13 ein Kohlenwasserstoffgruppe mit 2 bis 4 Kohlenstoffatomen, z.B. -(CH₂)₂-, -CH₂-CH(CH₃)-, -(CH₂)₄- und p = 1 bis 40 sein können. In einer besonderen Ausführungsform können verschiedene Lactone als Monomere eingesetzt werden.

Ebenso bevorzugt kann eine erfindungsgemäße Polymerzusammensetzung thermoplastisch verarbeitbare Polymere, ausgewählt aus der Gruppe der Polyolefine, Polyurethane, die thermoplastisch verarbeitbar sind, Polyphenylenether, wie sie in EP 0 657 519 beschrieben sind, Copolyetheramide und Copolyetheresteramide, aufweisen.

In einer weiteren Ausführungsform weist die erfindungsgemäße Polymerzusammensetzung zumindest ein vernetztes oder zumindest ein zu vernetzendes Polymer auf. Vorzugsweise weist die erfindungsgemäße Polymerzusammensetzug zumindest ein Polymer, ausgewählt aus der Gruppe der (Co)polyamide, (Co)polyester, Polyurethane oder Polyphenylenether, auf. Diese erfindungsgemäße Polymerzusammensetzung ermöglicht es, ein vernetztes weichgemachtes Polymer mit einem nicht flüchtigen Weichmacher, der ionischen Flüssigkeit, herzustellen.

Die in der erfindungsgemäßen Polymerzusammensetzung enthaltenen Polymere können linear oder verzweigt sein. Die erfindungsgemäßen Polymerzusammensetzungen können ein oder mehrere Polymere, sei es als Polymerblend, Copolymer oder physikalisches Gemisch, enthalten, vorzugsweise weist die erfindungsgemäße Polymerzusammensetzung zumindest eine Polymermischung oder zumindest ein Polymerblend auf. Die polymere Komponente kann Additive, wie beispielsweise UV-Stabilisatoren, Füllstoffe, Flammschutzmittel, Antioxidantien, aufweisen. Die erfindungsgemäße Polymerzusammensetzung kann in einer besonderen Ausführungsform modifizierte, z.B. endgruppenmodifizierte Polymere aufweisen.

Die erfindungsgemäße Polymerzusammensetzung weist vorzugsweise, im Vergleich zu einem Polymer ohne die Anwesenheit der ionischen Flüssigkeit, einen um 18K niedrigere Glastemperatur auf, gemessen gemäß Differential Scanning Calorimetry (DSC).

Des weiteren weist die erfindungsgemäße Polymerzusammensetzung, die ein kristallines oder teilkristallines Polymer aufweist - im Vergleich zum Polymer ohne die Anwesenheit der ionischen Flüssigkeit - eine höhere Rekristallisationsfähigkeit gemessen durch Einsetzen der Rekristallisation bei höherer Temperatur bei einem DSC-Abkühlungsversuch aus der Polymerschmelze.

Diese morphologischen Eigenschaften können die Verarbeitbarkeit, insbesondere die thermoplastische Verarbeitbarkeit der erfindungsgemäßen Polymerzusammensetzung gegenüber einer Polymerzusammensetzung ohne eine ionische Flüssigkeit verbessern. Dies zeigt sich z.B. dadurch, dass die erfindungsgemäße Polymerzusammensetzung bei tieferen Temperaturen geformt werden kann, ohne dass eine Zersetzung der Polymerkette erfolgt, oder der Formgebungsprozess kann bei höheren Temperaturen erfolgen, ohne dass der Weichmacher - die ionische Flüssigkeit - flüchtig ist.

Die erfindungsgemäße Polymerzusammensetzung kann zusätzlich mikrobizide Eigenschaften aufweisen. Diese erfindungsgemäße Polymerzusammensetzungen mit mikrobiziden Eigenschaften weisen bevorzugt eine ionische Flüssigkeit mit einem quartemären AmmoniumIon, besonders bevorzugt jedoch TEGOTAIN^{®} 3300, das selbst bereits mikrobizide Eigenschaften aufweist, auf. In einer besonderen Ausführungsform der erfindungsgemäßen Polymerzusammensetzung kann zumindest eines der eingesetzten Polymere bereits mikrobizide Eigenschaften aufweisen. Polymere, die mikrobizide Eigenschaften aufweisen, werden u.a. in DE 199 52 221, DE 199 43 344 oder DE 199 40 023 beschrieben.

Des weiteren kann die erfindungsgemäße Polymerzusammensetzung zusätzlich antistatische Eigenschaften aufweisen. Die antistatischen Eigenschaften können entweder über die Anlagerung von Wassermolekülen (erhöhte Wasseraufnahme) und damit nach dem Prinzip der allgemein bekannten Leitfähigkeitsverbesserung von polymeren Werkstoffen durch Zugabe von Salzen, wie z.B. Kaliumformiat, erfolgen oder durch eine der zugesetzten ionischen Flüssigkeiten intrinsisch zuordenbaren Ionenleitfähigkeit hervorgerufen werden.

Bei dem erfindungsgemäßen Verfahren zur Herstellung einer Polymerzusammensetzung, die zumindest ein Polymer ohne ionische Gruppen und zumindest eine Verbindung mit weichmachenden Eigenschaften aufweist, wobei die Polymerzusammensetzung als Weichmacher 0,1 Gew.-% bis 30 Gew.-% ionische Flüssigkeit aufweist, insbesondere der erfindungsgemäßen Polymerzusammensetzung wird vorzugsweise zunächst die ionische Flüssigkeit mit einer polymeren Komponente der Polymerzusammensetzung, beispielsweise mit zumindest einem der Polymere, in Kontakt gebracht und anschließend wird die ionische Flüssigkeit in der Polymerzusammensetzung verteilt. Hierbei kann eine der Komponenten der erfindungsgemäßen Polymerzusammensetzung im geschmolzenen oder festen Zustand oder gelöst in einem Lösemittel vorliegen. In dem Falle, dass eine der Komponenten der erfindungsgemäßen Polymerzusammensetzung in einem Lösemittel gelöst eingesetzt wird, kann anschließend das Lösemittel von der Vorstufe der erfindungsgemäßen Polymerzusammensetzung abgetrennt werden, bevorzugt geschieht dies durch ein thermisches Trennverfahren, wie z.B. Destillation, oder durch Ausfällen der erfindungsgemäßen Polymerzusammensetzung, z.B. durch Zusatz eines Nicht-Lösemittels oder durch Absenken der Temperatur.

In einer besonderen Ausführungsform des erfindungsgemäßen Verfahrens kann das Löse- oder Quellungsmittel, das in diesem Falle gleich der ionischen Flüssigkeit ist, in der erfindungsgemäßen Polymerzusammensetzung enthalten bleiben. Dies ist besonders vorteilhaft bei mehrphasigen Polymersystemen, bei der z.B. nur eine der polymeren Komponente mit der ionischen Flüssigkeit verträglich ist, hieraus können sich für das Mehrphasensystem zusätzliche neue Eigenschaften ergeben, bevorzugt an den Phasengrenzen. Eine weitere Verwendungsmöglichkeit der erfindungsgemäßen Polymerzusammensetzung, bei der die ionische Flüssigkeit enthalten bleibt, ist das Lösen oder Anquellen einer Polymerkomponente eines Mehrphasensystems, wobei eine weitere Polymerkomponente mit der reinen ionischen Flüssigkeit unverträglich ist. Durch Mischen oder Kneten dieses Mehrphasensystems kann man erreichen, dass die ionische Flüssigkeit in die Phase, die mit der reinen ionischen Flüssigkeit unverträglich ist, übergeht.

In einer besonderen Ausführungsform des erfindungsgemäßen Verfahrens erfolgt das Verteilen der ionischen Flüssigkeit in der Polymerzusammensetzung mittels eines Mischprozesses. Hierbei kann die ionische Flüssigkeit mit der schmelzflüssigen Phase der polymeren Komponente in Kontakt gebracht und anschließend durchmischt werden. Eine weitere Möglichkeit besteht darin, die ionische Flüssigkeit mit der festen Phase der polymeren Komponente in Kontakt zu bringen, anschließend aufzuschmelzen und danach zu durchmischen. Beispielsweise kann dies durch ein mechanisches Mischen der polymeren Komponente und der ionischen Flüssigkeit mittels eines Extruders oder Rührers bei angemessenen Temperaturen erfolgen, bevorzugt ist das Mischen der einzelnen Komponenten der erfindungsgemäßen Polymerzusammensetzung in einem 1- oder 2-Wellenkneter, wobei die polymere Komponente im geschmolzenen Zustand vorliegt. Des weiteren kann beim Mischprozess die polymere Komponente in der ionischen Flüssigkeit bei höheren Temperaturen gelöst werden oder es werden sowohl die polymere Komponente als auch die ionische Flüssigkeit in einem Lösemittel gelöst. In einer besonderen Ausführungsform dieses Verfahrensteilschritt wird die polymere Komponente, die z.B. ausgefälltes, sprühgetrocknetes oder (kalt-)gemahlenes Polymer aufweist, mit der ionischen Flüssigkeit gegebenenfalls durch Zusatz eines Lösemittels für die ionische Flüssigkeit, das ein Nicht-Lösemittel für die polymere Komponente darstellt, gemischt, um somit eine homogene Verteilung der ionischen Flüssigkeit in der erfindungsgemäßen Polymerzusammensetzung zu erhalten.

In einer weiteren bevorzugten Ausführungsform des erfindungsgemäßen Verfahrens erfolgt das Verteilen der ionischen Flüssigkeit in der Polymerzusammensetzung mittels Diffusion. Bevorzugt ist hier das Imprägnieren von Polymerpulvern mittels einer ionischen Flüssigkeit, besonders bevorzugt ist das Imprägnieren von Folien, Fasern, Schäumen oder Spritzgussteilen unter Verwendung von Hilfsstoffen, wie z.B. Lösemittel.

Die erfindungsgemäße Polymerzusammensetzung bzw. die gemäß erfindungsgemäßen Verfahren hergestellte Polymerzusammensetzung kann z.B. in einem Verfahren zur Formgebung eingesetzt werden. Bei der Formgebung kann ein Kunststoff, der eine erfindungsgemäße Polymerzusammensetzung bzw. eine gemäß erfindungsgemäßen Verfahren hergestellte Polymerzusammensetzung aufweist oder die erfindungsmäßige Polymerzusammensetzung selbst ist, mittels z.B. Spritzguss, Extrusion oder Blasformen thermisch geformt werden. Bei der Spritzgussverarbeitung von Thermoplasten kommt es insbesondere auf eine gute Verarbeitbarkeit der Polymermaterialien an. Diese kann bei der Verwendung von Polymeren mit stark polaren aufgrund der intra- und intermolekularen Wechselwirkungen eingeschränkt sein. Durch den Einsatz der erfindungsgemäßen Polymerzusammensetzungen bzw. der gemäß dem erfindungsgemäßen Verfahren hergestellten Polymerzusammensetzung, bei denen ionische Flüssigkeiten als Weichmacher, eingesetzt werden, werden die Wechselwirkungen zwischen den polymergebundenen funktionellen Gruppen erniedrigt und damit eine verbesserte Verarbeitbarkeit erreicht.

Die erfindungsgemäße Polymerzusammensetzung bzw. die gemäß erfindungsgemäßen Verfahren hergestellte Polymerzusammensetzung kann auch als Einsatzstoff in Spinnprozessen verwendet werden. Bei zu Fasern zu verspinnenden Polymeren kann die ionische Flüssigkeit den Spinnprozess ermöglichen bzw. erleichtern. Aufgrund der Erniedrigung der Schmelzviskosität durch den Zusatz von ionischen Flüssigkeiten kann das Verarbeitungsfenster für den Spinnprozess erweitert werden; gleiches gilt für die Folienherstellung oder andere Extrusionsverfahren.

Die als weichmachende Verarbeitungshilfsmittel enthaltenen ionischen Flüssigkeiten in den erfindungsgemäßen Polymerzusammensetzungen bzw. in den gemäß dem erfindungsgemäßen Verfahren hergestellte Polymerzusammensetzungen können, sofern sie mit Wasser oder einem anderen mit dem Polymer unverträglichen Lösemittel mischbar sind, auch nach der Verarbeitung aus den Polymeren wieder extrahiert werden, wodurch Struktur und Eigenschaften des Polymers verändert werden kann. Hierdurch können sich für einzelne Polymertypen neue Anwendungsgebiete erschließen.

Ein weiterer Gegenstand der Erfindung ist die Verwendung der erfindungsgemäßen Polymerzusammensetzung bzw. der gemäß erfindungsgemäßen Verfahren hergestellten Polymerzusammensetzung zur Herstellung von Folien, Filmen, Sportschuhe, Beschichtungen, bevorzugt bei Sportgeräten oder -artikeln, wie z.B. die Beschichtungen von Snowboards, und Membranen. Bevorzugt ist die Verwendung der erfindungsgemäßen Polymerzusammensetzung bzw. der gemäß erfindungsgemäßen Verfahren hergestellten Polymerzusammensetzung als Schmelzkleber, Haftvermittler, Binder, Füllmaterial oder Packaging Material. Die Verwendung der erfindungsgemäßen Polymerzusammensetzung bzw. der gemäß erfindungsgemäßen Verfahren hergestellten Polymerzusammensetzung als Haftvermittler dient bevorzugt in polymeren Vielstoffsystemen, wie z.B. in Mehrschichtrohren oder Compoundsystemen. In Displays oder anderen elektronischen Bauteilen kann die erfindungsmäßige Polymerzusammensetzung bzw. die gemäß erfindungsgemäßen Verfahren hergestellte Polymerzusammensetzung als Binder, Füllmaterial oder als Packaging Material verwendet werden. Bei der Herstellung von Membranen, bevorzugt von keramischen Membranen, kann die erfindungsgemäße Polymerzusammensetzung bzw. die gemäß erfindungsgemäßen Verfahren hergestellte Polymerzusammensetzung verwendet werden, daraus kann sich eine Verbesserung der Trennwirkung der Membran einstellen.

Die erfindungsgemäße Polymerzusammensetzung bzw. die gemäß erfindungsgemäßen Verfahren hergestellte Polymerzusammensetzung kann als Bestandteil einer Mischung von Polymeren, die nicht mischbar oder nicht verträglich sind, als Verträglichkeitsverbesserer zur Herstellung eines Polymerblends, bevorzugt von homogenen Polymerblends verwendet werden.

In einer weiteren Verwendung der erfindungsgemäßen Polymerzusammensetzung bzw. der gemäß erfindungsgemäßen Verfahren hergestellten Polymerzusammensetzung kann diese als Viskositäts- und/oder Leitfähigkeitsmodifier in Polymermischungen oder -kompositionen verwendet werden. Hierbei kann die erfindungsgemäße Polymerzusammensetzung bzw. die gemäß erfindungsgemäßen Verfahren hergestellte Polymerzusammensetzung als sogenannte Masterbatch verwendet werden.

Die erfindungsgemäße Polymerzusammensetzung bzw. die gemäß erfindungsgemäßen Verfahren hergestellte Polymerzusammensetzung kann in diesen Verwendungen im Gemisch mit anderen Polymeren oder direkt eingesetzt werden.

Die erfindungsgemäße Polymerzusammensetzung bzw. die gemäß erfindungsgemäßen Verfahren hergestellte Polymerzusammensetzung ermöglicht es, neuartige Binder- bzw. Klebersysteme herzustellen. Durch die Anwesenheit von ionischen Gruppierungen durch die ionische Flüssigkeit kann das Klebeverhalten der erfindungsgemäßen Polymerzusammensetzung bzw. der gemäß erfindungsgemäßen Verfahren hergestellten Polymerzusammensetzung zu polaren oder durch die ionischen Flüssigkeiten angequollenen bzw. angelösten Oberflächen verbessert werden.

Leitfähige Bindersysteme und Klebstoffe werden nach dem heutigem Stand der Technik durch Zusatz von speziellen Leitfähigkeitsfüllstoffen hergestellt. Antistatik-Ausrüstungen von Formmassen, Lacken, Gummi und Schaumstoffen werden entweder durch Einarbeitung von leitfähigkeitsverbessernden Füllstoffen, Fasern, z.B. Ruß oder Grafit, oder niedermolekularen Salzen, wie Kaliumformiat, erzeugt. Elektrisch leitende Klebstoffe haben sich in der Vergangenheit als Alternative bzw. in Ergänzung zum Weichlöten insbesondere in der Elektronik eingeführt. Als Basispolymere kommen vorwiegend Epoxidharze zum Einsatz; außerdem sind Klebstoffsysteme auf Cyanacrylat-, Silicon- und Polyimidbasis bekannt. Als leitfähigkeitsanhebende Additive sind Gold, Silber, Kupfer oder Nickel in Plättchen- bzw.
Flockenform bekannt, ebenso z.B. silberüberzogene Glas-Beads (EP 0 195 859).

Daneben ist zum Stand der Technik bei leitfähig ausgerüsteten Polymermaterialien für elektronische Anwendungen zu erwähnen, dass es Materialien gibt, die entweder über eine Zugabe von intrinsisch leitfähigen Polymermaterialien (z.B. BF₄-dotiertes Poly(ethoxythiophen)) als Additiv für heißsiegelbare antistatisch ausgerüstete Filme (DE 42 19 410) oder die mit Zusatz von leitfähigen Partikeln oder antistatisch bzw. leitfähig ausgerüsteten Fasern die Leitfähigkeit des Polymerblends anheben.

Die Anpassung der elektrischen Eigenschaften der erfindungsgemäßen Polymerzusammensetzung bzw. der gemäß erfindungsgemäßen Verfahren hergestellten Polymerzusammensetzung ist durch die Einbringung der ionischen Gruppierungen mittels der ionischen Flüssigkeiten in die Polymerzusammensetzung in weiten Bereichen möglich. Damit ist eine zusätzliche antistatische oder zum Teil auch halbleitende Eigenschaft der erfindungsgemäßen Polymerzusammensetzung bzw. der gemäß erfindungsgemäßen Verfahren hergestellten Polymerzusammensetzung erzeugbar. Die erfindungsgemäße Polymerzusammensetzung bzw. die gemäß erfindungsgemäßen Verfahren hergestellte Polymerzusammensetzung kann daher in elektrischen und elektronischen Bauteilen als halbleitender bzw. antistatischer Binder oder Kleber zur (Co-)Extrusions- oder Spritzgussverarbeitung eingesetzt werden. Die Verwendung der erfindungsgemäßen Polymerzusammensetzung bzw. der gemäß erfindungsgemäßen Verfahren hergestellten Polymerzusammensetzung, z.B. in elektronischen Bauteilen, kann aufgrund der variablen elektrischen und thermischen Eigenschaften dieser Systeme besonders vorteilhaft sein.

Die folgenden Beispiele sollen die Erfindung näher erläutern, ohne ihren Schutzumfang einzuschränken:

### Beispiel: Herstellung einer erfindungsgemäßen Polymerzusammensetzung

5 g VESTAMELT, ein Schmelzkleber auf der Basis von Copolyamiden der Degussa AG und 15 Gew.-% ionische Flüssigkeit bezogen auf VESTAMELT (entspricht 0,75 g ionischer Flüssigkeit) in 25 g Aceton wurden in einer Schüttelapparatur inniglich vermischt und anschließend wurde im Rotationsverdampfer das Aceton entfernt.

Als ionische Flüssigkeiten wurden eingesetzt:
- 1-Ethyl-3-methylimidazolinium tosylat
- Trioctylammonium octylsulfat (Referenzbeispiel)
- 1,3-Dimethylimidazolinium octylsulfat

Als VESTAMELT-Pulver wurden eingesetzt:
- VESTAMELT VM 250-P2
- VESTAMELT VM 430-P2
- VESTAMELT VM 470-P830

In der folgenden Tabelle ist die Absenkung der Schmelz- bzw. Glastemperatur und die gleichzeitige Erhöhung der Schmelzenthalpien im Vergleich zu den Originalpulvern dargestellt.

| **VESTAMELT** | **Ionische Flüssigkeit** | **ΔTm (K)** | **ΔTg (K)** | **Δ(ΔH) (J/g)** |
|---|---|---|---|---|
| VM250 | Trioctylammonium octylsulfat | -4,8 | n.b. | 14,5 |
| VM430 | 1-Ethyl-3-methylimidazolinium tosylat | -5,4 | -14,3 | 16,3 |
| | Trioctylammonium octylsulfat* | -5,7 | -10,0 | 1,7 |
| | 1,3-Dimethylimidazolinium octylsulfat | -6,0 | -16,6 | 11,5 |
| VM470 | 1-Ethyl-3-methylimidazolinium tosylat | -4,0 | -14,9 | 10,3 |
| | 1,3-Dimethylimidazolinium octylsulfat | -4,5 | -18,0 | 13,6 |

| | | | | |
|---|---|---|---|---|
| * Referenzbeispiel | | | | |

Durch den Einsatz von ionischen Flüssigkeiten als Weichmacher wird eine Absenkung der Schmelz- sowie der Glastemperatur erreicht und somit eine verbesserte thermoplastische Verarbeitung ermöglicht.

## Patentansprüche

1. Polymerzusammensetzung, die zumindest ein zumindest teilkristallines Polymer ohne ionische Gruppen und zumindest eine Verbindung mit weichmachenden Eigenschaften aufweist,
**dadurch gekennzeichnet,**
**dass** die Polymerzusammensetzung als Weichmacher 0,1 Gew.-% bis 30 Gew.-% ionische Flüssigkeit aufweist, wobei die ionische Flüssigkeit ein Salz mit einem Kation, gemäß den nachfolgenden Strukturen, 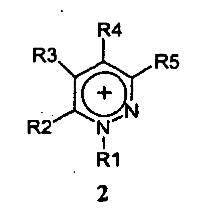 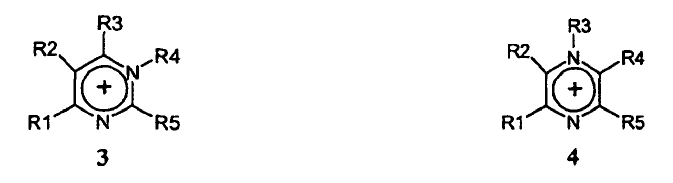 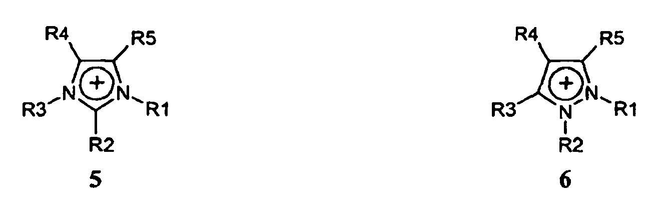 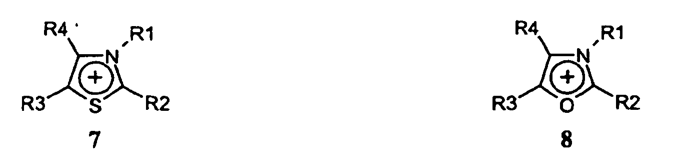 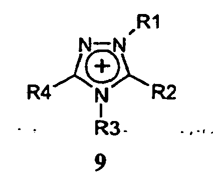 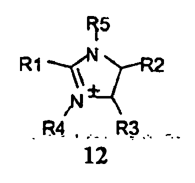 wobei R1, R2, R3, R4, R5 und, gleich oder unterschiedlich und Wasserstoff, einen linearen oder verzweigten aliphatischen Kohlenwasserstoffrest mit 1 bis 20 Kohlenstoffatomen, einen cycloaliphatischen Kohlenwasserstoffrest mit 5 bis 30 Kohlenstoffatomen, einen aromatischen Kohlenwasserstoffrest mit 6 bis 30 Kohlenstoffatomen, einen Alkylarylrest mit 7 bis 40 Kohlenstoffatomen, einen durch ein oder mehrere Heteroatome (Sauerstoff, NH, NCH₃) unterbrochenen linearen oder verzweigten aliphatischen Kohlenwasserstoffrest mit 2 bis 20 Kohlenstoffatomen, einen durch ein oder mehrere Funktionalitäten, ausgewählt aus der Gruppe, -O-C(O)-, -(O)C-O-, -NH-C(O)-, -(O)C-NH, -(CH₃)N-C(O)-, -(O)C-N(CH₃)-, -S(O)₂-O-, -O-S(O)₂-, -S(O)₂-NH-, -NH-S(O)₂-, -S(O)₂-N(CH₃)-, -N(CH₃)-S(O)₂-, unterbrochenen linearen oder verzweigten aliphatischen Kohlenwasserstoffrest mit 2 bis 20 Kohlenstoffatomen, einen endständig -OH, -NH₂, -N(H)CH₃ funktionalisierten linearen oder verzweigten aliphatischen Kohlenwasserstoffrest mit 1 bis 20 Kohlenstoffatomen oder einen blockweise oder statistisch aufgebauten Polyether gemäß -(R⁷-O)ₙ-R⁸ bedeuten, wobei R⁷ ein 2 bis 4 Kohlenstoffatome enthaltender linearer oder verzweigter Kohlenwasserstoffrest ist, n = 1 bis 30 ist und R⁸ Wasserstoff, einen linearen oder verzweigten aliphatischen Kohlenwasserstoffrest mit 1 bis 20 Kohlenstoffatomen, einen cycloaliphatischen Kohlenwasserstoffrest mit 5 bis 30 Kohlenstoffatomen, einen aromatischen Kohlenwasserstoffrest mit 6 bis 30 Kohlenstoffatomen, einen Alkylarylrest mit 7 bis 40 Kohlenstoffatomen bedeutet oder ein Rest -C(O)-R⁹ mit R⁹ gleich einem linearen oder verzweigten aliphatischen Kohlenwasserstoffrest mit 1 bis 20 Kohlenstoffatomen, einem cycloaliphatischen Kohlenwasserstoffrest mit 5 bis 30 Kohlenstoffatomen, einem aromatischen Kohlenwasserstoffrest mit 6 bis 30 Kohlenstoffatomen, einem Alkylarylrest mit 7 bis 40 Kohlenstoffatomen sind;
und einem Anion, ausgewählt aus der Gruppe bestehend aus Halogenid, Phosphat, Alkylphosphaten, Nitrat, Sulfat, Hydrogensulfat, Alkylsulfaten, Arylsulfaten, perfluorierten Alkyl- und Arylsulfaten, Sulfonat, Alkylsulfonaten, Arylsulfonaten, perfluorierten Arylsulfonaten, Perchlorat, Tetrachloroaluminat, Alkylboraten, Tosylat, Saccharinat, Alkylcarboxylaten; oder eine Mischung mehrerer solcher Salze ist.

2. Polymerzusammensetzung gemäß Anspruch 1,
**dadurch gekennzeichnet,**
**dass** die Polymerzusammensetzung 0,5 Gew.-% bis 25 Gew. -% ionische Flüssigkeit aufweist.

3. Polymerzusammensetzung nach Anspruch 1 oder 2,
**dadurch gekennzeichnet,**
**dass** die Polymerzusammensetzung als zumindest teilkristallines Polymer zumindest ein thermoplastisch verarbeitbares Polymer, ausgewählt aus der Gruppe der (Co)polyamide, (Co)polyester,
Polyurethane, Polyphenylenether, Polyolefine, (Co)polyetheramide, Polyaramide, Polyether(ether)ketone und Polyetheresteramide, aufweist.

4. Polymerzusammensetzung gemäß zumindest einem der Ansprüche 1 bis 3,
**dadurch gekennzeichnet,**
**dass** die Polymerzusammensetzung als zumindest teilkristallines Polymer zumindest ein vernetztes oder zumindest ein zu vernetzendes Polymer, ausgewählt aus der Gruppe der (Co)polyamide, (Co)polyester, Polyurethane oder Polyphenylenether aufweist.

5. Polymerzusammensetzung gemäß zumindest einem der Ansprüche 1 bis 4,
**dadurch gekennzeichnet,**
**dass** das Polymer linear oder verzweigt ist.

6. Polymerzusammensetzung gemäß zumindest einem der Ansprüche 1 bis 5,
**dadurch gekennzeichnet,**
**dass** die Polymerzusammensetzung zumindest eine Polymermischung und/oder zumindest ein Polymerblend aufweist.

7. Polymerzusammensetzung gemäß zumindest einem der Ansprüche 1 bis 6,
**dadurch gekennzeichnet,**
**dass** die ionische Flüssigkeit ein halogenfreies Anion, ausgewählt aus der Gruppe bestehend aus Phosphat, Alkylphosphaten, Nitrat, Sulfat, Alkylsulfaten, Arylsulfaten, Sulfonat, Alkylsulfonaten, Arylsulfonaten, Alkylboraten, Tosylat, Saccharinat und Alkylcarboxylaten, aufweist.

8. Polymerzusammensetzung gemäß zumindest einem der Ansprüche 1 bis 7,
**dadurch gekennzeichnet**,
das die ionische Flüssigkeit der Polymerzusammensetzung unterschiedliche Anionen aufweist.

9. Polymerzusammensetzung gemäß zumindest einem der Ansprüche 1 bis 8,
**dadurch gekennzeichnet,**
**dass** die Polymerzusammensetzung mikrobizide Eigenschaften aufweist.

10. Polymerzusammensetzung gemäß zumindest einem der Ansprüche 1 bis 9,
**dadurch gekennzeichnet,**
**dass** die Polymerzusammensetzung antistatische Eigenschaften aufweist.

11. Polymerzusammensetzung gemäß zumindest einem der Ansprüche 1 bis 10,
**dadurch gekennzeichnet,**
**dass** die Polymerzusammensetzung im Vergleich zu einem Polymer ohne ionischer Flüssigkeit eine um bis zu 18K niedrigere Glastemperatur aufweist, gemessen gemäß Differential Scanning Calorimetry (DSC).

12. Verfahren zur Herstellung einer Polymerzusammensetzung, die zumindest ein Polymer
ohne ionische Gruppen und zumindest eine Verbindung mit weichmachenden Eigenschaften aufweist, wobei die Polymerzusammensetzung als Weichmacher 0,1 Gew.-% bis 30 Gew.-% ionische Flüssigkeit aufweist,
**dadurch gekennzeichnet,**
**dass** zunächst eine ionische Flüssigkeit, wobei die ionische Flüssigkeit ein Salz mit einem Kation, gemäß den nachfolgenden Strukturen, 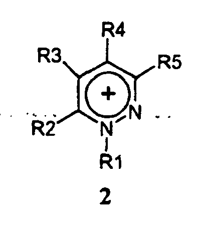 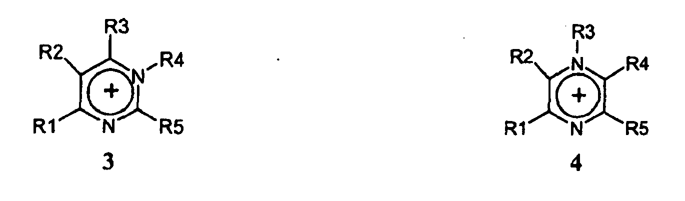 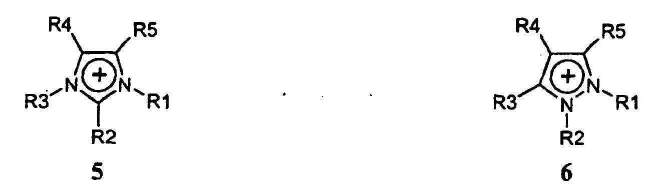 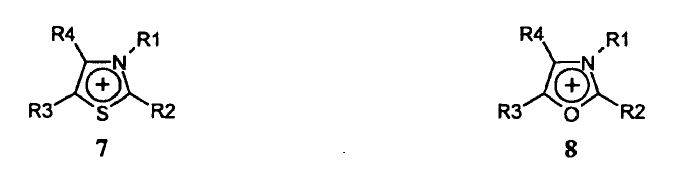 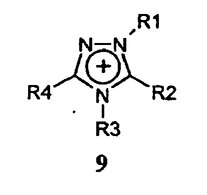 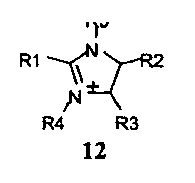 wobei R1, R2, R3, R4, R5 und, gleich oder unterschiedlich und Wasserstoff, einen linearen oder verzweigten aliphatischen Kohlenwasserstoffrest mit 1 bis 20 Kohlenstoffatomen, einen cycloaliphatischen Kohlenwasserstoffrest mit 5 bis 30 Kohlenstoffatomen, einen aromatischen Kohlenwasserstoffrest mit 6 bis 30 Kohlenstoffatomen, einen Alkylarylrest mit 7 bis 40 Kohlenstoffatomen, einen durch ein oder mehrere Heteroatome (Sauerstoff, NH, NCH₃) unterbrochenen linearen oder verzweigten aliphatischen Kohlenwasserstoffrest mit 2 bis 20 Kohlenstoffatomen, einen durch ein oder mehrere Funktionalitäten, ausgewählt aus der Gruppe -O-C(O)-, -(O)C-O-, -NH-C(O)-, -(O)C-NH, -(CH₃)N-C(O)-, -(O)C-N(CH₃)-, -S(O)₂-O-, -O-S(O)₂-, -S(O)₂-NH-, -NH-S(O)₂-, -S(O)₂-N(CH₃)-, -N(CH₃)-S(O)₂-, unterbrochenen linearen oder verzweigten aliphatischen Kohlenwasserstoffrest mit 2 bis 20 Kohlenstoffatomen, einen endständig -OH, -NH₂, -N(H)CH₃ funktionalisierten linearen oder verzweigten aliphatischen Kohlenwasserstoffrest mit 1 bis 20 Kohlenstoffatomen oder einen blockweise oder statistisch aufgebauten Polyether gemäß -(R⁷-O)ₙ-R⁸ bedeuten, wobei R⁷ ein 2 bis 4 Kohlenstoffatome enthaltender linearer oder verzweigter Kohlenwasserstoffrest ist, n = 1 bis 30 ist und R⁸ Wasserstoff, einen linearen oder verzweigten aliphatischen Kohlenwasserstoffrest mit 1 bis 20 Kohlenstoffatomen, einen cycloaliphatischen Kohlenwasserstoffrest mit 5 bis 30 Kohlenstoffatomen, einen aromatischen Kohlenwasserstoffrest mit 6 bis 30 Kohlenstoffatomen, einen Alkylarylrest mit 7 bis 40 Kohlenstoffatomen bedeutet oder ein Rest -C(O)-R⁹ mit R⁹ gleich einem linearen oder verzweigten aliphatischen Kohlenwasserstoffrest mit 1 bis 20 Kohlenstoffatomen, einem cycloaliphatischen Kohlenwasserstoffrest mit 5 bis 30 Kohlenstoffatomen, einem aromatischen Kohlenwasserstoffrest mit 6 bis 30 Kohlenstoffatomen, einem Alkylarylrest mit 7 bis 40 Kohlenstoffatomen sind;
und einem Anion, ausgewählt aus der Gruppe bestehend aus Halogenid, Phosphat, Alkylphosphaten, Nitrat, Sulfat, Hydrogensulfat, Alkylsulfaten, Arylsulfaten, perfluorierten Alkyl- und Arylsulfaten, Sulfonat, Alkylsulfonaten, Arylsulfonaten, perfluorierten Arylsulfonaten, Perchlorat, Tetrachloroaluminat, Alkylboraten, Tosylat, Saccharinat, Alkylcarboxylaten; oder eine Mischung mehrerer solcher Salze ist,mit einer polymeren Komponente der Polymerzusammensetzung in Kontakt gebracht und anschließend die ionische Flüssigkeit in der Polymerzusammensetzung verteilt wird.

13. Verfahren gemäß Anspruch 12,
**dadurch gekennzeichnet,**
**dass** eine Polymerzusammensetzung gemäß einem der Ansprüche 1 bis 11 hergestellt wird.

14. Verfahren gemäß Anspruch 12 oder 13,
**dadurch gekennzeichnet,**
**dass** das Verteilen der ionischen Flüssigkeit in der Polymerzusammensetzung mittels eines Mischprozesses erfolgt.

15. Verfahren gemäß zumindest einem der Ansprüche 12 bis 14,
**dadurch gekennzeichnet,**
**dass** die ionische Flüssigkeit mit einer schmelzflüssigen Phase der polymeren Komponente in Kontakt gebracht und durchmischt wird.

16. Verfahren gemäß Anspruch 15,
**dadurch gekennzeichnet,**
**dass** das Mischen der Komponenten der Polymerzusammensetzung in einem 1- oder 2-Wellenkneter durchgeführt wird, wobei die polymere Komponente im geschmolzenen Zustand vorliegt.

17. Verfahren gemäß zumindest einem der Ansprüche 12 bis 14,
**dadurch gekennzeichnet,**
**dass** die ionische Flüssigkeit mit einer festen Phase der polymeren Komponente in Kontakt gebracht und nach dem Aufschmelzen durchmischt wird.

18. Verfahren gemäß Anspruch 12 oder 13,
**dadurch gekennzeichnet,**
**dass** das Verteilen der ionischen Flüssigkeit in der Polymerzusammensetzung mittels Diffusion erfolgt.

19. Verfahren gemäß Anspruch 18,
**dadurch gekennzeichnet,**
**dass** die Herstellung mittels Imprägnierung von Polymerpulvern mittels einer ionischen Flüssigkeit erfolgt.

20. Verfahren gemäß zumindest einem der Ansprüche 12 bis 14,
**dadurch gekennzeichnet,**
**dass** zumindest ein Polymer und/oder eine ionische Flüssigkeit in einem Lösemittel gelöst eingesetzt wird.

21. Verfahren gemäß Anspruch 20,
**dadurch gekennzeichnet,**
**dass** das Lösemittel von einer Vorstufe der Polymerzusammensetzung mittels eines thermischen Trennverfahrens abgetrennt wird.

22. Verfahren gemäß Anspruch 20,
**dadurch gekennzeichnet,**
**dass** das Lösemittel von einer Vorstufe der Polymerzusammensetzung durch Ausfällen der Polymerzusammensetzung abgetrennt wird.

23. Verwendung einer Polymerzusammensetzung gemäß einem der Ansprüche 1 bis 11 oder einer Polymerzusammensetzung hergestellt nach einem Verfahren gemäß einem der Ansprüche 12 bis 22 als Schmelzkleber, Haftvermittler, Binder, Füllmaterial, Packaging Material, Verträglichkeitsverbesserer zur Herstellung von Polymerblends, Viskositäts- und/oder Löslichkeitsmodifier in Polymermischungen oder -kompositionen oder zur Herstellung von Folien, Filmen, Beschichtungen, Membranen und Formkörper, wobei die Formgebung mittels Spritzguß, Extrusion oder Blasformen erfolgt.

24. Schmelzkleber eine Polymerzusammensetzung gemäß zumindest einem der Ansprüche 1 bis 11 oder eine Polymerzusammensetzung hergestellt nach einem Verfahren gemäß einem der Ansprüche 12 bis 22 aufweisend.

25. Binder eine Polymerzusammensetzung gemäß zumindest einem der Ansprüche 1 bis 11 oder eine Polymerzusammensetzung hergestellt nach einem Verfahren gemäß einem der Ansprüche 12 bis 22 aufweisend.

26. Sportartikel eine Polymerzusammensetzung gemäß zumindest einem der Ansprüche 1 bis 11 oder eine Polymerzusammensetzung hergestellt nach einem Verfahren gemäß einem der Ansprüche 12 bis 22 aufweisend.

## Claims

1. Polymer composition which comprises at least one at least semicrystalline polymer having no ionic groups and comprises at least one compound with plasticizing properties,
**characterized in that**
the polymer composition comprises 0.1 to 30% by weight of ionic liquid as plasticizer,
where the ionic liquid is a salt having a cation of the following structures 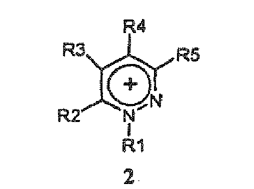 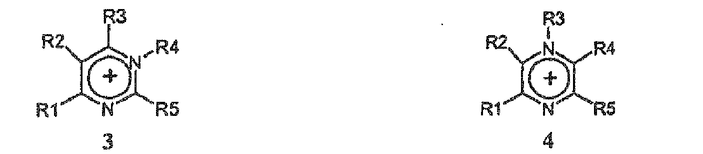 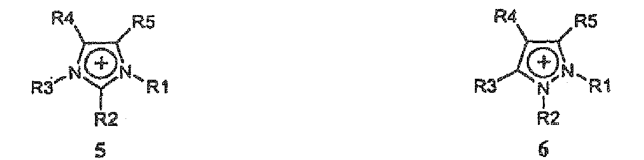 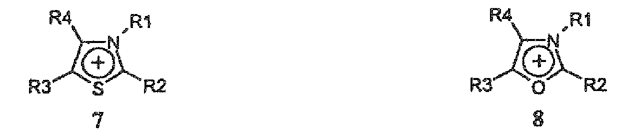 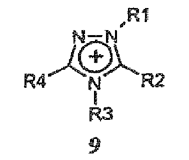 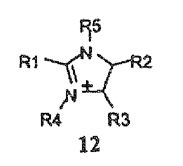 where R1, R2, R3, R4, R5 are identical or different and are hydrogen, a linear or branched aliphatic hydrocarbon radical having from 1 to 20 carbon atoms, a cycloaliphatic hydrocarbon radical having from 5 to 30 carbon atoms, an aromatic hydrocarbon radical having from 6 to 30 carbon atoms, an alkylaryl radical having from 7 to 40 carbon atoms, a linear or branched aliphatic hydrocarbon radical having from 2 to 20 carbon atoms and having interruption by one or more heteroatoms (oxygen, NH, NCH₃), or are a linear or branched aliphatic hydrocarbon radical having from 2 to 20 carbon atoms and having interruption by one or more functionalities selected from the group -O-C(O)-, -(O)C-O-, NH-C(O)-, -(O)C-NH, -(CH₃)N-C(O)-, -(O)C-N(CH₃)-, -S (O)₂-O-, -O-S(O)₂-, -S(O)₂-NH-, -NH-S(O)₂-, -S(O)₂-N(CH₃)-, -N(CH₃)-S(O)₂-, or are a linear or branched aliphatic hydrocarbon radical having from 1 to 20 carbon atoms, terminally functionalized by -OH, -NH₂, or -N(H)CH₃, or are a polyether of formula -(R⁷-O)ₙ-R⁸ having block or random structure, where R⁷ is a linear or branched hydrocarbon radical having from 2 to 4 carbon atoms, n = from 1 to 30, and R⁸ is hydrogen, a linear or branched aliphatic hydrocarbon radical having from 1 to 20 carbon atoms, a cycloaliphatic hydrocarbon radical having from 5 to 30 carbon atoms, an aromatic hydrocarbon radical having from 6 to 30 carbon atoms, an alkylaryl radical having from 7 to 40 carbon atoms, or a -C(O)-R⁹ radical, where R⁹ is a linear or branched aliphatic hydrocarbon radical having from 1 to 20 carbon atoms, a cycloaliphatic hydrocarbon radical having from 5 to 30 carbon atoms, an aromatic hydrocarbon radical having from 6 to 30 carbon atoms, an alkylaryl radical having from 7 to 40 carbon atoms; and having an anion selected from the group consisting of halide, phosphate, alkylated phosphates, nitrate, sulfate, hydrogensulfate, alkyl sulfates, aryl sulfates, perfluorinated alkyl sulfates, perfluorinated aryl sulfates, sulfonate, alkylsulfonates, arylsulfonates, perfluorinated arylsulfonates, perchlorate, tetrachloroaluminate, alkylated borates, tosylate, saccharinate, alkyl carboxylates; or is a mixture of two or more of these salts.

2. Polymer composition according to Claim 1,
**characterized in that**
the polymer composition comprises from 0.5 to 25% by weight of ionic liquid.

3. Polymer composition according to Claim 1 or 2,
**characterized in that**
the polymer composition comprises, as at least semicrystalline polymer, at least one thermoplastically processable polymer selected from the group of the (co)polyamides, (co)polyesters, polyurethanes, polyphenylene ethers, polyolefins, (co)polyetheramides, polyaramides, polyether(ether)ketones, and polyetheresteramides.

4. Polymer composition according to at least one of Claims 1 to 3,
**characterized in that**
the polymer composition comprises, as at least semicrystalline polymer, at least one crosslinked, or at least one crosslinkable, polymer selected from the group of the (co)polyamides, (co)polyesters, polyurethanes, and polyphenylene ethers.

5. Polymer composition according to at least one of Claims 1 to 4,
**characterized in that**
the polymer is linear or branched.

6. Polymer composition according to at least one of Claims 1 to 5,
**characterized in that**
the polymer composition comprises at least one polymer mixture and/or at least one polymer blend.

7. Polymer composition according to at least one of Claims 1 to 6,
**characterized in that**
the ionic liquid contains a halogen-free anion selected from the group consisting of phosphate, alkyl phosphates, nitrate, sulfate, alkyl sulfates, aryl sulfates, sulfonate, alkylsulfonates, arylsulfonates, alkyl borates, tosylate, saccharinate, and alkyl carboxylates.

8. Polymer composition according to at least one of Claims 1 to 7,
**characterized in that**
the ionic liquid of the polymer composition contains various anions.

9. Polymer composition according to at least one of Claims 1 to 8,
**characterized in that**
the polymer composition has microbicidal properties.

10. Polymer composition according to at least one of Claims 1 to 9,
**characterized in that**
the polymer composition has antistatic properties.

11. Polymer composition according to at least one of Claims 1 to 10,
**characterized in that**
the polymer composition has a glass transition temperature, measured by differential scanning calorimetry (DSC), which is lower by up to 18K than that of a polymer comprising no ionic liquid.

12. Process for preparing a polymer composition which comprises at least one polymer having no ionic groups and comprises at least one compound with plasticizing properties, where the polymer composition comprises from 0.1 to 30% by weight of ionic liquid as plasticizer,
**characterized in that**
an ionic liquid, where the ionic liquid is a salt having a cation of the following structures 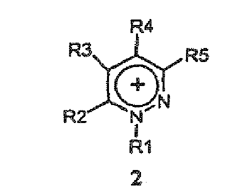 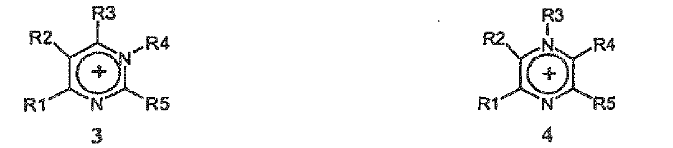 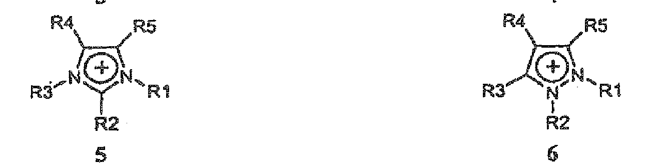 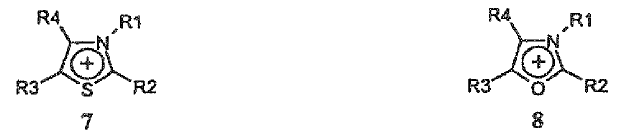 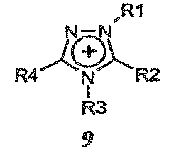 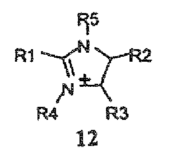 where R1, R2, R3, R4, R5 are identical or different and are hydrogen, a linear or branched aliphatic hydrocarbon radical having from 1 to 20 carbon atoms, a cycloaliphatic hydrocarbon radical having from 5 to 30 carbon atoms, an aromatic hydrocarbon radical having from 6 to 30 carbon atoms, an alkylaryl radical having from 7 to 40 carbon atoms, a linear or branched aliphatic hydrocarbon radical having from 2 to 20 carbon atoms and having interruption by one or more heteroatoms (oxygen, NH, NCH₃), or are a linear or branched aliphatic hydrocarbon radical having from 2 to 20 carbon atoms and having interruption by one or more functionalities selected from the group -O-C(O)-, -(O)C-O-, NH-C(O)-, -(O)C-NH, -(CH₃)N-C(O)-, -(O)C-N(CH₃)-, -S(O)₂-O-, -O-S(O)₂-, -S(O)₂-NH-, -NH-S(O)₂-, -S(O)₂-N(CH₃)-, -N(CH₃)-S(O)₂-, or are a linear or branched aliphatic hydrocarbon radical having from 1 to 20 carbon atoms, terminally functionalized by -OH, -NH₂, or -N(H)CH₃, or are a polyether of formula -(R⁷-O)ₙ-R⁸ having block or random structure, where R⁷ is a linear or branched hydrocarbon radical having from 2 to 4 carbon atoms, n = from 1 to 30, and R⁸ is hydrogen, a linear or branched aliphatic hydrocarbon radical having from 1 to 20 carbon atoms, a cycloaliphatic hydrocarbon radical having from 5 to 30 carbon atoms, an aromatic hydrocarbon radical having from 6 to 30 carbon atoms, an alkylaryl radical having from 7 to 40 carbon atoms, or a -C(O)-R⁹ radical, where R⁹ is a linear or branched aliphatic hydrocarbon radical having from 1 to 20 carbon atoms, a cycloaliphatic hydrocarbon radical having from 5 to 30 carbon atoms, an aromatic hydrocarbon radical having from 6 to 30 carbon atoms, an alkylaryl radical having from 7 to 40 carbon atoms; and having an anion selected from the group consisting of halide, phosphate, alkylated phosphates, nitrate, sulfate, hydrogensulfate, alkyl sulfates, aryl sulfates, perfluorinated alkyl sulfates, perfluorinated aryl sulfates, sulfonate, alkylsulfonates, arylsulfonates, perfluorinated arylsulfonates, perchlorate, tetrachloroaluminate, alkylated borates, tosylate, saccharinate, alkyl carboxylates; or is a mixture of two or more of these salts, is first brought into contact with a polymeric component of the polymer composition, and the ionic liquid is then dispersed in the polymer composition.

13. Process according to Claim 12,
**characterized in that**
a polymer composition according to any of Claims 1 to 11 is prepared.

14. Process according to Claim 12 or 13,
**characterized in that**
the dispersion of the ionic liquid in the polymer composition takes place by means of a mixing process.

15. Process according to at least one of Claims 12 to 14,
**characterized in that**
the ionic liquid is brought into contact with, and thoroughly mixed with, a molten phase of the polymeric component.

16. Process according to Claim 15,
**characterized in that**
the mixing of the components of the polymer composition is carried out in a single- or twinscrew kneader, the polymeric component being molten.

17. Process according to at least one of Claims 12 to 14,
**characterized in that**
the ionic liquid is brought into contact with a solid phase of the polymeric component, and thoroughly mixed after melting.

18. Process according to Claim 12 or 13,
**characterized in that**
the dispersion of the ionic liquid in the polymer composition takes place by means of diffusion.

19. Process according to Claim 18,
**characterized in that**
the preparation takes place by means of impregnation of polymer powders by an ionic liquid.

20. Process according to at least one of Claims 12 to 14,
**characterized in that**
use is made of at least one polymer and/or one ionic liquid dissolved in a solvent.

21. Process according to Claim 20,
**characterized in that**
the solvent is removed by a thermal separation process from a precursor of the polymer composition.

22. Process according to Claim 20,
**characterized in that**
the solvent is removed from a precursor of the polymer composition by precipitation of the polymer composition.

23. Use of a polymer composition according to any of Claims 1 to 11, or of a polymer composition prepared by a process according to any of Claims 12 to 22, as hot-melt adhesive, adhesion promoter, binder, filler material, packaging material, compatibilizer for preparing polymer blends, agent modifying viscosity and/or solubility in polymer mixtures or polymer compositions, or for the production of unsupported films, supported films, coatings, membranes, or moldings, where shaping takes place by means of injection molding, extrusion, or blow molding.

24. Hot-melt adhesive comprising a polymer composition according to at least one of Claims 1 to 11, or comprising a polymer composition prepared by a process according to any of Claims 12 to 22.

25. Binder comprising a polymer composition according to at least one of Claims 1 to 11, or comprising a polymer composition prepared by a process according to any of Claims 12 to 22.

26. Sports product comprising a polymer composition according to at least one of Claims 1 to 11, or comprising a polymer composition prepared by a process according to any of Claims 12 to 22.

## Revendications

1. Composition polymère qui présente au moins un polymère au moins partiellement cristallin sans groupes ioniques et au moins un composé avec des propriétés plastifiantes, **caractérisée**
**en ce que** la composition polymère contient comme plastifiant 0,1% en poids à 30% en poids de liquide ionique, le liquide ionique étant un sel avec un cation selon les structures suivantes, 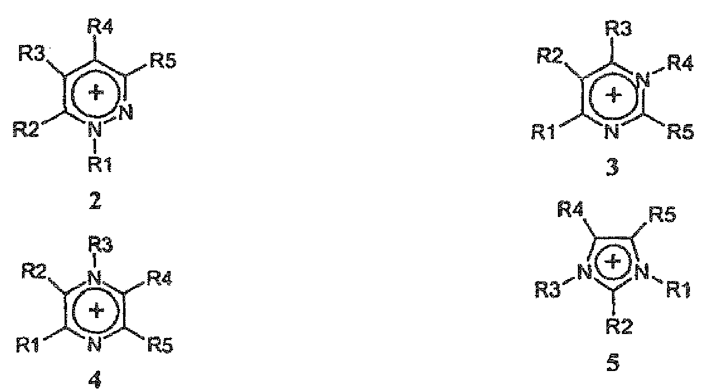 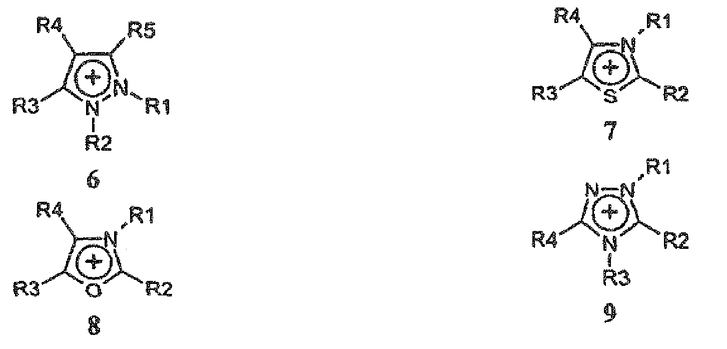 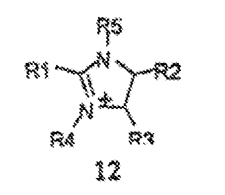 où R1, R2, R3, R4, R5, sont identiques ou différents et signifient hydrogène, un radical hydrocarboné aliphatique, linéaire ou ramifié, comprenant 1 à 20 atomes de carbone, un radical hydrocarboné cycloaliphatique comprenant 5 à 30 atomes de carbone, un radical hydrocarboné aromatique comprenant 6 à 30 atomes de carbone, un radical alkylaryle comprenant 7 à 40 atomes de carbone, un radical hydrocarboné aliphatique linéaire ou ramifié comprenant 2 à 20 atomes de carbone, interrompu par un ou plusieurs hétéroatomes (oxygène, NH, NCH₃), un radical hydrocarboné aliphatique linéaire ou ramifié comprenant 2 à 20 atomes de carbone interrompu par une ou plusieurs fonctionnalités, choisies dans le groupe formé par -O-C(O)-, -(O)C-O-, -NH-C(O)-, -(O)C-NH, -(CH₃)N-C(O)-, -(O)C-N(CH₃)-, -S(O)₂-O-, -O-S(O)₂-, -S(O)₂-NH-, -NH-S(O)₂-, -S(O)₂-N(CH₃)-, -N(CH₃)-S(O)₂-, un radical hydrocarboné aliphatique linéaire ou ramifié comprenant 1 à 20 atomes de carbone fonctionnalisé en position terminale par -OH, -NH₂, -N(H)CH₃ ou un polyéther à blocs ou statistique selon -(R⁷-O)ₙ-R⁸, R⁷ signifiant un radical hydrocarboné linéaire ou ramifié comprenant 2 à 4 atomes de carbone, n = 1 à 30 et R⁸ signifiant hydrogène, un radical hydrocarboné aliphatique linéaire ou ramifié comprenant 1 à 20 atomes de carbone, un radical hydrocarboné cycloaliphatique comprenant 5 à 30 atomes de carbone, un radical hydrocarboné aromatique comprenant 6 à 30 atomes de carbone, un radical alkylaryle comprenant 7 à 40 atomes de carbone ou un radical -C(O)-R⁹ avec R⁹ représentant un radical hydrocarboné aliphatique linéaire ou ramifié comprenant 1 à 20 atomes de carbone, un radical hydrocarboné cycloaliphatique comprenant 5 à 30 atomes de carbone, un radical hydrocarboné aromatique comprenant 6 à 30 atomes de carbone, un radical alkylaryle comprenant 7 à 40 atomes de carbone ;
et un anion choisi dans le groupe constitué par les halogénures, le phosphate, les alkylphosphates, le nitrate, le sulfate, l'hydrogénosulfate, les alkylsulfates, les arylsulfates, les alkylsulfates et les arylsulfates perfluorés, le sulfonate, les alkylsulfonates, les arylsulfonates, les arylsulfonates perfluorés, le perchlorate, le tétrachloroaluminate, les alkylborates, le tosylate, le saccharinate, les alkylcarboxylates ; ou un mélange de plusieurs de ces sels.

2. Composition polymère selon la revendication 1, **caractérisée**
**en ce que** la composition polymère présente 0,5% en poids à 25% en poids de liquide ionique.

3. Composition polymère selon la revendication 1 ou 2, **caractérisée**
**en ce que** la composition polymère présente, comme polymère au moins partiellement cristallin, au moins un polymère pouvant être transformé thermoplastiquement, choisi dans le groupe formé par les (co)polyamides, les (co)polyesters, les polyuréthanes, les polyphénylénéthers, les polyoléfines, les (co)polyétheramides, les polyaramides, les polyéther(éther)cétones et les polyétheresteramides.

4. Composition polymère selon au moins l'une quelconque des revendications 1 à 3, **caractérisée en ce que** la composition polymère présente, comme polymère au moins partiellement cristallin, au moins un polymère réticulé ou au moins un polymère à réticuler, choisi dans le groupe formé par les (co)polyamides, les (co)polyesters, les polyuréthanes ou les polyphénylénéthers.

5. Composition polymère selon au moins l'une quelconque des revendications 1 à 4, **caractérisée en ce que** le polymère est linéaire ou ramifié.

6. Composition polymère selon au moins l'une quelconque des revendications 1 à 5, **caractérisée en ce que** la composition polymère présente au moins un mélange polymère et/ou au moins un composite polymère.

7. Composition polymère selon au moins l'une quelconque des revendications 1 à 6, **caractérisée en ce que** le liquide ionique présente un anion exempt d'halogène, choisi dans le groupe formé par le phosphate, les alkylphosphates, le nitrate, le sulfate, les alkylsulfates, les arylsulfates, le sulfonate, les alkylsulfonates, les arylsulfonates, les alkylborates, le tosylate, le saccharinate et les alkylcarboxylates.

8. Composition polymère selon au moins l'une quelconque des revendications 1 à 7, **caractérisée en ce que** le liquide ionique de la composition polymère présente différents anions.

9. Composition polymère selon au moins l'une quelconque des revendications 1 à 8, **caractérisée en ce que** la composition polymère présente des propriétés microbiocides.

10. Composition polymère selon au moins l'une quelconque des revendications 1 à 9, **caractérisée en ce que** la composition polymère présente des propriétés antistatiques.

11. Composition polymère selon au moins l'une quelconque des revendications 1 à 10, **caractérisée en ce que** la composition polymère, par rapport à un polymère sans liquide ionique, présente une température de transition vitreuse inférieure de jusqu'à 18K, mesurée selon la calorimétrie différentielle par balayage (Differential Scanning Calorimetry - DSC).

12. Procédé pour la préparation d'une composition polymère qui présente au moins un polymère sans groupes ioniques et au moins un composé avec des propriétés plastifiantes, la composition polymère présentant comme plastifiant 0,1% en poids à 30 % en poids de liquide ionique, **caractérisé**
**en ce qu'**on met d'abord en contact un liquide ionique, le liquide ionique étant un sel avec un cation selon les structures suivantes, 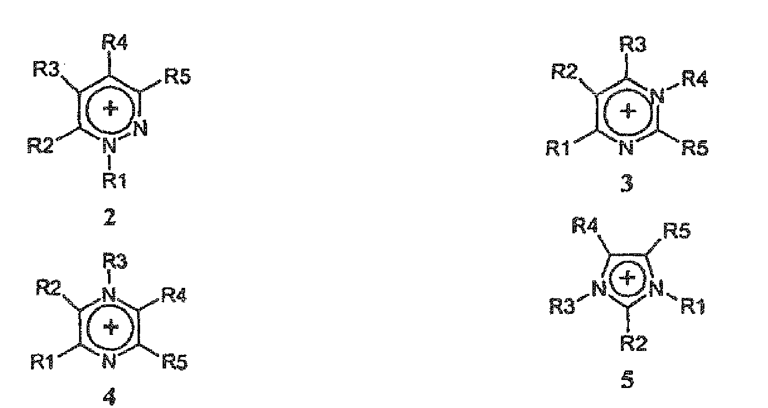 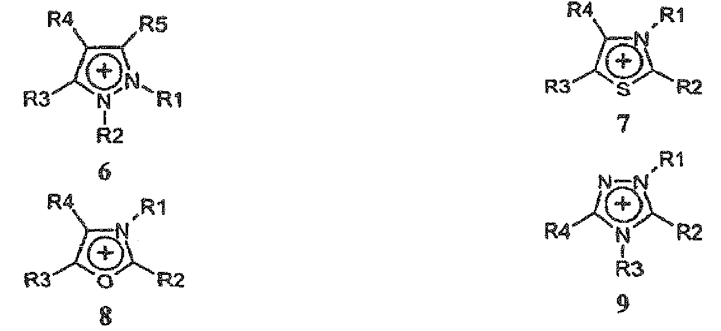 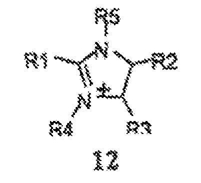 où R1, R2, R3, R4, R5, sont identiques ou différents et signifient hydrogène, un radical hydrocarboné aliphatique, linéaire ou ramifié, comprenant 1 à 20 atomes de carbone, un radical hydrocarboné cycloaliphatique comprenant 5 à 30 atomes de carbone, un radical hydrocarboné aromatique comprenant 6 à 30 atomes de carbone, un radical alkylaryle comprenant 7 à 40 atomes de carbone, un radical hydrocarboné aliphatique linéaire ou ramifié comprenant 2 à 20 atomes de carbone, interrompu par un ou plusieurs hétéroatomes (oxygène, NH, NCH₃), un radical hydrocarboné aliphatique linéaire ou ramifié comprenant 2 à 20 atomes de carbone interrompu par une ou plusieurs fonctionnalités, choisies dans le groupe formé par -O-C(O)-, -(O)C-O-, -NH-C(O)-, -(O)C-NH, -(CH₃)N-C(O)-, -(O)C-N(CH₃)-, -S (O)₂-O-, -O-S(O)₂-, -S(O)₂-NH-, -NH-S(O)₂-, -S(O)₂-N(CH₃)-, -N(CH₃)-S(O)₂-, un radical hydrocarboné aliphatique linéaire ou ramifié comprenant 1 à 20 atomes de carbone fonctionnalisé en position terminale par -OH, -NH₂, -N(H)CH₃ ou un polyéther à blocs ou statistique selon -(R⁷-O)ₙ-R⁸, R⁷ signifiant un radical hydrocarboné linéaire ou ramifié comprenant 2 à 4 atomes de carbone, n = 1 à 30 et R⁸ signifiant hydrogène, un radical hydrocarboné aliphatique linéaire ou ramifié comprenant 1 à 20 atomes de carbone, un radical hydrocarboné cycloaliphatique comprenant 5 à 30 atomes de carbone, un radical hydrocarboné aromatique comprenant 6 à 30 atomes de carbone, un radical alkylaryle comprenant 7 à 40 atomes de carbone ou un radical -C(O)-R⁹ avec R⁹ représentant un radical hydrocarboné aliphatique linéaire ou ramifié comprenant 1 à 20 atomes de carbone, un radical hydrocarboné cycloaliphatique comprenant 5 à 30 atomes de carbone, un radical hydrocarboné aromatique comprenant 6 à 30 atomes de carbone, un radical alkylaryle comprenant 7 à 40 atomes de carbone ;
et un anion choisi dans le groupe constitué par les halogénures, le phosphate, les alkylphosphates, le nitrate, le sulfate, l'hydrogénosulfate, les alkylsulfates, les arylsulfates, les alkylsulfates et les arylsulfates perfluorés, le sulfonate, les alkylsulfonates, les arylsulfonates, les arylsulfonates perfluorés, le perchlorate, le tétrachloroaluminate, les alkylborates, le tosylate, le saccharinate, les alkylcarboxylates ; ou un mélange de plusieurs de ces sels, avec un composant polymère de la composition polymère et le liquide ionique est ensuite réparti dans la composition polymère.

13. Procédé selon la revendication 12, **caractérisé en ce qu'**on prépare une composition polymère selon l'une quelconque des revendications 1 à 11.

14. Procédé selon la revendication 12 ou 13, **caractérisé**
**en ce que** la répartition du liquide ionique dans la composition polymère est réalisée au moyen d'un procédé de mélange.

15. Procédé selon au moins l'une quelconque des revendications 12 à 14, **caractérisé**
**en ce** qui le liquide ionique est mis en contact et mélangé avec une phase en masse fondue du composant polymère.

16. Procédé selon la revendication 15, **caractérisé**
**en ce que** le mélange des composants de la composition polymère est réalisé dans un malaxeur à 1 ou 2 arbres, le composant polymère se trouvant à l'état fondu.

17. Procédé selon au moins l'une quelconque des revendications 12 à 14, **caractérisé**
**en ce** qui le liquide ionique est mis en contact avec une phase solide du composant polymère et est mélangé après la fusion.

18. Procédé selon la revendication 12 ou 13, **caractérisé**
**en ce que** la répartition du liquide ionique dans la composition polymère se produit par diffusion.

19. Procédé selon la revendication 18, **caractérisé en ce que** la préparation est réalisée au moyen d'une imprégnation de poudres polymères par un liquide ionique.

20. Procédé selon au moins l'une quelconque des revendications 12 à 14, **caractérisé**
**en ce qu'**au moins un polymère et/ou un liquide ionique est utilisé sous forme dissoute dans un solvant.

21. Procédé selon la revendication 20, **caractérisé en ce que** le solvant est séparé d'un précurseur de la composition polymère au moyen d'un procédé de séparation thermique.

22. Procédé selon la revendication 20, **caractérisé en ce que** le solvant est séparé d'un précurseur de la composition polymère par précipitation de la composition polymère.

23. Utilisation d'une composition polymère selon l'une quelconque des revendications 1 à 11 ou d'une composition polymère préparée selon un procédé selon l'une quelconque des revendications 12 à 22 comme adhésif en masse fondue, promoteur d'adhérence, liant, charge, matériau d'emballage, agent d'amélioration de la compatibilité pour la production de composites polymères, agent de modification de la viscosité et/ou de la solubilité dans des mélanges ou des compositions polymères ou pour la production de feuilles, films, revêtements, membranes et corps façonnés, le façonnage étant réalisé par moulage par injection, extrusion ou soufflage.

24. Adhésif en masse fondue présentant une composition polymère selon au moins l'une quelconque des revendications 1 à 11 ou une composition polymère préparée selon un procédé selon l'une quelconque des revendications 12 à 22.

25. Liant présentant une composition polymère selon au moins l'une quelconque des revendications 1 à 11 ou u ne composition polymère préparée selon un procédé selon l'une quelconque des revendications 12 à 22.

26. Article de sport présentant une composition polymère selon au moins l'une quelconque des revendications 1 à 11 ou une composition polymère préparée selon un procédé selon l'une quelconque des revendications 12 à 22.
